# EUROPEAN PATENT APPLICATION

(11) **EP 4 804 037 A1**
(43) Date of publication of application: **09.09.2026**
(21) Application number: 25226662.2
(22) Date of filing: 23.12.2025
(51) Int. Cl.: G06F 12/0811, G06F 12/0813, G06F 12/0831, G06F 12/084, G06F 12/0842

(54) **TECHNIQUES TO MANAGE DATA SHARING FOR A MULTI-CORE PROCESSOR**

(30) Priority: 06.03.2025 US 202519072355
(71) Applicant: Intel Corporation, Santa Clara, CA 95054 (US)
(72) Inventor: Singla, Priyanka, 110017 New Delhi (IN); Jindal, Neetu, 136118 Kurukshetra (IN); Polishuk, Leon, 3467701 Haifa HA (IL); Mandal, Ayan, 560103 Bangalore (IN)
(74) Representative: Samson & Partner Patentanwälte mbB

(57) **Abstract**

Examples include techniques to manage data sharing for a multi-core processor. The examples include use of a data sharing counter value to determine whether to cause a last level cache (LLC) slice allocated to a core of the multi-core processor to be placed in an inclusive or non-inclusive mode for other cores of the multi-core processor to access data loaded to the LLC slice.

## Description

### TECHNICAL FIELD

Examples described herein are generally related to techniques associated with managing data sharing for a multi-core processor that includes tracking a level of data sharing between cores of the multi-core processor for data stored to a last level cache.

### BACKGROUND

A multi-core processor can be deployed in a data center environment to execute various types of workloads that can include various cores sharing data. For example, artificial intelligence (AI) inference workloads can use multiple cores to operate on the same data. These types of AI inference workloads can be associated with a weight matrix and the operation on the same data by the multiple cores can improve overall memory latency and memory bandwidth characteristics for execution of AI inference workloads.

### BRIEF DESCRIPTION OF THE DRAWINGS

**FIG. 1** illustrates an example processor system.
**FIG. 2** illustrates an example coherent compute complex.
**FIG. 3** illustrates an example of data sharing counter circuitry coupled with an interface of a coherent compute fabric.
**FIG. 4** illustrate an example first scheme.
**FIG. 5** illustrates an example first logic flow.
**FIG. 6** illustrates an example second logic flow.
**FIG. 7** illustrates an example third logic flow.
**FIG. 8** illustrates an example second scheme.
**FIG. 9** illustrates an example fourth logic flow.
**FIG. 10** illustrates an example computing system.
**FIG. 11** illustrates a block diagram of an example processor and/or System on a Chip (SoC) that may have one or more cores and an integrated memory controller.
**FIG. 12** is a block diagram illustrating a computing system configured to implement one or more aspects of the examples described herein.
**FIG. 13A** illustrates examples of a parallel processor.
**FIG. 13B** illustrates examples of a block diagram of a partition unit.
**FIG. 13C** illustrates examples of a block diagram of a processing cluster within a parallel processing unit.
**FIG. 13D** illustrates examples of a graphics multiprocessor in which the graphics multiprocessor couples with the pipeline manager of the processing cluster.
**FIGS. 14A-C** illustrate additional graphics multiprocessors, according to examples.
**FIG. 15** shows a parallel compute system, according to some examples.
**FIGS. 16A-B** illustrate a hybrid logical/physical view of a disaggregated parallel processor, according to examples described herein.
**FIG. 17A** is a block diagram illustrating both an example in-order pipeline and an example register renaming, out-of-order issue/execution pipeline according to examples.
**FIG. 17B** is a block diagram illustrating both an example in-order architecture core and an example register renaming, out-of-order issue/execution architecture core to be included in a processor according to examples.
**FIG. 18** illustrates examples of execution unit(s) circuitry, such as execution unit(s) circuitry.
**FIG. 19** is a block diagram of a register architecture according to some examples.
**FIG. 20** illustrates examples of an instruction format.
**FIG. 21** illustrates examples of an addressing information field.
**FIGS. 22A-B** illustrates examples of a first prefix.
**FIGS. 23A-D** illustrate examples of how the R, X, and B fields of the first prefix are used.
**FIGS. 24A-B** illustrate examples of a second prefix.
**FIG. 25** illustrates examples of a third prefix.
**FIGS. 26A-B** illustrate thread execution logic including an array of processing elements employed in a graphics processor core according to examples described herein.
**FIG. 27** illustrates an additional execution unit, according to an example.
**FIG. 28** is a block diagram illustrating a graphics processor instruction formats according to some examples.
**FIG. 29** is a block diagram of another example of a graphics processor.
**FIG. 30A** is a block diagram illustrating a graphics processor command format according to some examples.
**FIG. 30B** is a block diagram illustrating a graphics processor command sequence according to an example.
**FIG. 31** is a block diagram illustrating the use of a software instruction converter to convert binary instructions in a source ISA to binary instructions in a target ISA according to examples.
**FIG. 32** is a block diagram illustrating an IP core development system that may be used to manufacture an integrated circuit to perform operations according to some examples.

### DETAILED DESCRIPTION

AI workloads executed by multi-core processors in a data center deployment can include running a low batch inference workload that distributes a single problem (e.g., a big matrix multiplication) across multiple cores in order to increase overall workload throughput. These types of low batch inference workloads can typically be arranged to operate on two kinds of matrix which are shared across the cores. The first kind of matrix can be a weight matrix that includes use of "read-only" data from system memory (e.g., maintained in a dynamic random access memory (DRAM) device) and includes a last level cache (LLC) capacity (e.g., LLC footprint) that can be much larger than a typical, non-matrix workload LLC capacity. The second kind of matrix can be an activation matrix that includes use of data produced by one of the cores and then shared across multiple cores. The activation matrix usually has a much smaller LLC capacity compared to a typical, non-matrix workload LLC capacity.

In some examples, a weight matrix associated with a low batch inference workload can be read by multiple cores of a multi-core processor at the same time. For example, consider each core reading a same row of the weight matrix in a temporal window. A time to read this weight matrix by all the cores can directly impact an overall execution time of an application associated with the low batch inference workload. Hence it can be beneficial to improve both memory access latency and memory access bandwidth associated with reading this shared data from system memory (e.g., maintained in a DRAM device) and then distributing the shared data to cores (e.g., arranged in a compute cluster) in an efficient way.

According to some examples, when an LLC or LLC slice of a multi-core processor is arranged in a non-inclusive mode, data to be shared can be read or loaded from the system memory by a "leader" core. A "leader" core can be defined as a core of the multi-core processor that places a load request for the data to be loaded from system memory to an LLC slice first compared to other cores. The leader core's placement of the load request can result in a serializing of any other core's request for the data loaded from system memory that has the same LLC slice memory address for which the LLC caching agent will place/write the shared data into the LLC slice responsive to the leader core's load request. While from a perspective of an application requesting execution of a workload, all threads executed by respective cores can be considered as equal, but when these threads are deployed across multiple cores, one of the threads can be deemed as a leader. Once a core becomes the leader, that leader core stays as the leader during the entire workload execution phase due to above-mentioned serialization effect. If the LLC slice is placed in a non-inclusive mode for accessing the loaded data, a follower/non-leader core, in some examples, can send a snoop to the leader core which in turn can cause an exclusive copy of the loaded data to be forwarded to the follower core. Hence, the leader core can become a memory bandwidth hotspot along with being a point of serialization for other cores in the multi-core system since all the shared data comes first to the leader core after which it will be forwarded to the follower cores. This phenomenon can be referred to as a "snoop storm" since the leader core can be required to process all the snoops and cause the shared data to be forwarded from the LLC. In some examples, with increased system memory (e.g., DRAM) latencies, in the common case, when the leader receives a snoop, the data for the given address has not yet arrived from system memory. This can not only delay a snoop response but can also overflow a snoop buffer maintained at the leader core that can be configured to track which core has an exclusive copy of the data. The delayed snoop response and/or overflow of the snoop buffer can increase overall memory latency and/or decrease memory bandwidth. As described in this disclosure, example techniques are described that can mitigate or reduce harmful impacts on memory latency or memory bandwidth associated with a snoop storm arising when multiple cores share data (e.g., while executing an AI inference workload).

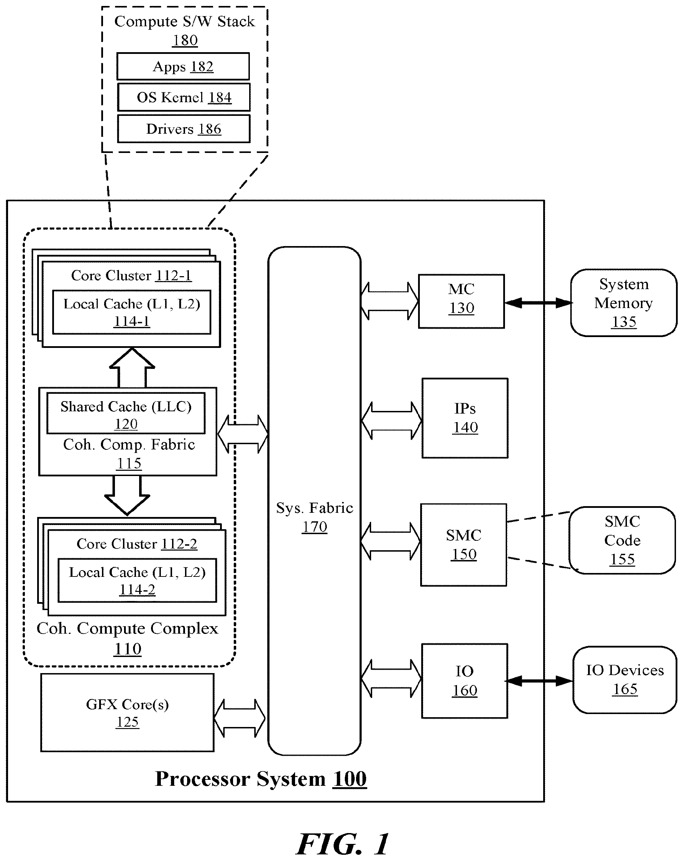

**FIG. 1** illustrates an example processor system 100. Processor system (or simply processor) 100 generally includes a coherent compute complex 110, a graphics core(s) 125, a memory controller 130 with an associated system memory 135, IP blocks 140, a system management controller(s) (SMC) 150, an input/output (IO) controller(s) 160 with associated IO devices 165, coupled together through a system fabric 170 as shown. System fabric 170 may be implemented with one or more busses, rings, and/or mesh networks, depending upon particular design configurations and objectives. (Note that IP stands for intellectual property and is typically used to indicate a re-usable block of functional circuitry for performing one or more functions). As used herein, the terms IP, IP block, or functional block can be used interchangeably, not only to refer to re-useable functional circuit blocks, whether self-designed or acquired from a third-party, but also, to produce specific circuit blocks. Examples of functional, or IP, blocks include, but are not limited to, display engines, video processing units, image processing units, graphics processing units, compute cores, digital signal processing units, universal serial bus controllers, memory controllers, or crypto encoders/decoders.

According to some examples, as shown in FIG. 1, coherent compute complex 110 can include core clusters 112-1 and 112-2. Each core cluster, for example, can include multiple compute cores, hereinafter referred to as "cores". These cores can be arranged on a same chip or die. In some examples, as shown in FIG. 1, both core cluster 112-1 and core cluster 112-2 can include respective local caches 114-1 and 114-2 for use by cores included in these core clusters.

Cores included in core clusters 112-1 or 112-2 can be configured or arranged to process software from compute software (S/W) stack 180. In some examples, as shown in FIG. 1, compute S/W stack 180 can include applications 182, operating system (OS) kernel 184, or drivers 186 for monitoring and/or controlling the hardware, or circuitry, within processor system 100. OS kernel 184 and drivers 186 can also be configured to work together with SMC 150 to manage power and performance (PnP) for the various blocks within processor system 100.

According to some examples, SMC 150 can include one or more microcontrollers, state machines and/or other logic circuits for controlling various aspects of processor system 100. For example, SMC 150 can manage functions such as security, boot configuration, or power and performance including utilized and allocated power along with thermal management. SMC 150 can also be referred to as a P-unit, a power management unit (PMU), a power control unit (PCU), a system management unit (SMU) or the like and can include multiple SMCs, PMUs, die management controllers, etc. SMC 150 can be configured to execute SMC code 155, which can include multiple separate software and/or firmware modules to perform these and other functions.

In some examples, as shown in FIG. 1, a coherent compute fabric 115 is included in coherent compute complex 110. Coherent compute fabric 115 can be configured to couple with or interconnect cores included in core cluster 112-1 and/or core cluster 112-2. Also, coherent compute fabric 115 can include a shared cache 120 (LLC). As will be discussed in more detail below, shared cache 120 can include multiple LLC slices coupled with cores included in core cluster 112-1 or 112-2. Each LLC slice can be arranged to separately store data loaded from a system memory 135 (e.g., maintained in one or more DRAM devices - not shown) responsive to load requests from the cores included in core clusters 112-1 or 112-2. That loaded data, for example, can be shared between cores arranged to execute an application (e.g., associated with an AI interference workload) that can include each core having either an exclusive or non-exclusive copy of the shared data. Also, as described more below, each core can include circuitry, features, and/or logic configured to maintain a data sharing count value and implement an algorithm to increment or decrement the data sharing count value as part of a scheme that includes dynamic snoop inclusion (DSI) to reduce harmful impacts on memory latency or memory bandwidth associated with potential snoop storms that can arise when multiple cores share data in an LLC slice included in a shared cache such as shared cache 120 when executing the application.

It should be appreciated that the processor system 100 can be implemented in various different manners. For example, processor system 100 can be implemented on a single die, multiple dies (dielets, chiplets), one or more dies in a common package, or one or more dies in multiple packages. Along these lines, some of these blocks can be located separately on different dies or together on two or more different dies.

According to some examples, cores included in core cluster 112-1 or 112-2 can support one or more instructions sets (e.g., the x86 instruction set architecture (optionally with some extensions that have been added with newer versions); the MIPS instruction set architecture; the ARM instruction set architecture (optionally with optional additional extensions such as NEON, etc.); RISC instruction set architecture), including the instruction(s) described herein. In some examples, the cores can include logic to support a packed data instruction set architecture extension (e.g., AVX1, AVX2, AVX512, AMX, etc.), thereby allowing the operations used by many multimedia applications to be performed using packed data.

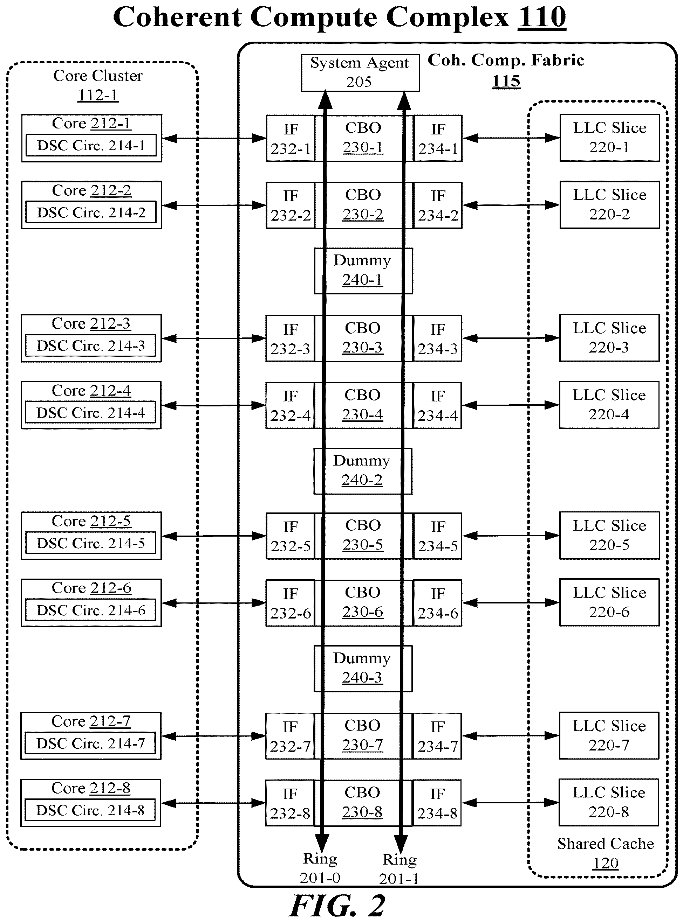

**FIG. 2** illustrates a more detailed view of coherent compute complex 110. According to some examples, as shown in FIG. 2, cores 212-1 to 212-8 can be included in core cluster 112-1 and can be coupled with coherent compute fabric 115 through respective interfaces (IFs) 232-1 to 232-8. For simplicity purposes, cores included in core cluster 112-2 are not shown in FIG. 2, but cores included in core cluster 112-2 could couple to coherent compute fabric 115 in a similar manner as mentioned above for cores included in core cluster 112-1. Also, as shown in FIG. 2, shared cache 120 can include LLC slices 220-1 to 220-8 that can be accessed via respective IFs 234-1 to 234-8. Each LLC slice 220, for example, can be allocated for use by a particular core from among cores 212 (e.g., LLC slice 220-1 allocated for use by core 212-1). Access via IFs 234-1 to 234-8 can include, for example, loading data to an LLC slice for use by the particular core to execute an application workload and/or sharing a copy of the loaded data with other core(s) (e.g., as part of a weighted or activation matrix operation). For these examples, coherent compute fabric 115 provides a coherent communications fabric to maintain data coherency between cores 212-1 to 212-8 that can be arranged to share data loaded into one or more LLC slices included in shared cache 120.

According to some examples, as shown in FIG. 2, coherency compute fabric 115 can include, but is not limited to, redundant rings 201-0 and 201-1. For these redundant rings, FIG. 2 shows three kinds of ring stops. A first kind of ring stop is shown as cache boxes (CBOs) 230-1 to 230-8. CBOs 230-1 to 230-8 can serve as respective injection and sink points for both IFs 232-1 to 232-8 attached to a respective cores 212-1 to 212-8 and IFs 234-1 to 234-8 attached to respective LLC slices 220-1 to 22-8. In some examples, IFs 232-1 to 232-8 can each be referred to as a "Corebo" and IFs 234-1 to 234-8 can each be referred to as a "Cachebo". CBO's 230-1 to 230-8 can include cache agent instances (not shown) to facilitate coherent data transactions through IFs 232-1 to 232-8 or IFs 234-1 to 234-8 for data loaded into an LLC slice from among LLC slices 220-1 to 220-8 and then subsequently shared between cores included in core cluster 112-1. A second kind of ring stop is shown in FIG. 2 as dummy 240-1 to 240-3. Each dummy 240-1 to 240-3 can be configured to serve as a repeater to primarily meet timing requirements and neither adds nor removes traffic routed over ring 201-0 or 201-1. A number of dummy stops for a given ring can vary based on a give topology or floor plan and examples are not limited to a single dummy 240 between two pairs of CBO 230 as shown in FIG. 2. A third kind of ring stop shown in FIG. 2 is a system agent 205. System agent 205 can be configured to serve as an attach point for request and responses placed to system memory (e.g., system memory 135) through rings 201-0 or 201-1. In some examples, coherent data transactions or traffic routed through rings 201-0 or 201-1 to either load data or share data between cores can be uniformly distributed between ring 201-0 and ring 201-1 for load balancing purposes.

In some examples, as shown in FIG. 2, cores 212-1 to 212-8 can each include a respective data sharing counter (DSC) circuitry 214-1 to 214-8. As described in more detail below, DSC circuitry 214-1 to 214-8 can include logic and/or features arranged to implement a scheme that includes dynamic snoop inclusion (DSI) and can also include routing coherent transactions through IFs 232-1 to 232-8 or IFs 234-1 to 234-8 at CBOs 230-1 to 230-8 of coherent compute fabric 115. As mentioned previously, a scheme that includes DSI can be implemented to reduce harmful impacts on memory latency (e.g., increased memory latency) and memory bandwidth (e.g., reduced memory bandwidth) associated with a potential snoop storm that can arise when multiple cores included in core cluster such as core cluster 112-1 share data loaded to an LLC slice included in shared cache such as shared cache 120 for use in executing an application workload.

According to some examples, DSC circuitry 214 can be located with a core included in core cluster 112-1. In other examples, DSC circuitry 214 can be separate circuitry located with or at a core included in core cluster 112-1. For example, DSC circuitry 214 can be arranged as an IP block, field programmable gate array (FPGA) or application specific integrated circuit (ASIC) configured to support implementation of a type of a scheme that includes DSI at a core included in core cluster such as core cluster 112-1.

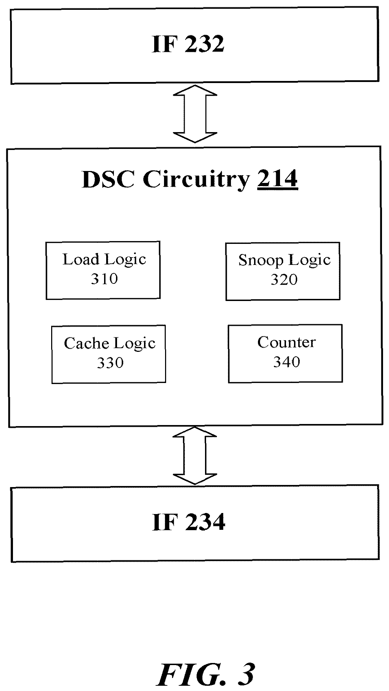

**FIG. 3** illustrates example DSC circuitry 214 to couple with IF 232 or IF 234 of coherent compute fabric 115. According to some examples, as shown in FIG. 3, DSC circuitry 214 can include a load logic 310, a snoop logic 320, a cache logic 330, or a counter 340. For these examples, the logic and/or features of DSC circuitry 214 can be coupled with IF 232 to monitor load requests or responses and can also be coupled with IF 234 to facilitate coherent data transactions associated with shared data loaded to LLC slices included in a shared cache such as shared cache 120. For these examples, load logic 310 can be configured or arranged to monitor load requests to load or obtain data from system memory (e.g., maintained in one or more DRAM devices) through IF 232 of coherent compute fabric 115. The load request, for example, can be associated with data to be used for execution of an AI inference workload by a leader core 212 that includes DSC circuitry 214. As described more below, load logic 310 can also be configured or arranged to cause a data sharing count value maintained by counter 340 to be decremented by a load count value following each load request by the leader core 212 in association with implementation of a scheme that includes DSI. Snoop logic 320 can be configured or arranged to monitor snoop requests receive from other, non-leader/follower cores 212. Cache logic 330 can be configured or arranged to determine whether snoop and/or read requests for shared data are hits or misses for data maintained in leader core 212's allocated LLC slice 220. Also as described more below, cache logic 330 can also be configured or arranged to cause the data sharing count value maintained by counter 340 to be incremented by an LLC hit count value following a read or snoop request that is an LLC hit for data maintained in core 212's allocated LLC slice 220 in association with implementation of the scheme that includes DSI. An LLC hit, for example, can be based on the snoop or read request from a non-leader/follower core 212 having information to indicate a request to access data stored to the same LLC slice memory address for which data loaded to the LLC slice 220 was allocated to the leader core 212.

According to some examples, counter 340 can be arranged to maintain the data sharing count value associated with implementation of the scheme that includes DSI. The data sharing count value can be used as a type of an indication of a data sharing level between a leader core 212 and non-leader/follower cores 212. For these examples, counter 340 can be a signed counter and can be allowed to maintain a negative data sharing count value. Also, counter 340 can have the data sharing count value reduced (e.g., by half) at a fixed time interval or at expiration of a time period so that a scheme that includes DSI can keep learning for new workload phases of an application executed by cores 212, while retaining some previous history. A higher data sharing count value maintained in counter 340 can indicate an increased or higher level of data sharing between cores 212. Meanwhile, a lower data sharing count value maintained in counter 340 can indicate a lower or decreased level of data sharing between cores 212.

In some examples, as described more below, implementation of a scheme that includes DSI can include setting or programming a counter threshold value for a data sharing count value maintained by counter 340 to determine whether an amount of data sharing between cores can cause LLC slices 220 to be in an non-inclusive or inclusive mode of operation. The non-inclusive mode can indicate a lower level of data sharing between cores 212 (below counter threshold value) during execution of a workload and an inclusive mode can indicate a higher level of data sharing between cores 212 (above counter threshold value) during execution of the workload. In some example, a non-inclusive mode can include extensive use of snoop requests to a leader core for non-leader/follower cores to obtain an exclusive copy of data maintained in the leader core's allocated LLC slice. Meanwhile, inclusive mode can include read requests from non-leader/follower cores to the leader core and the leader core can cause/enable a shared, non-exclusive copy of the data maintained in its allocated LLC slice to be sent to the requesting non-leader/follower cores, without a snoop request.

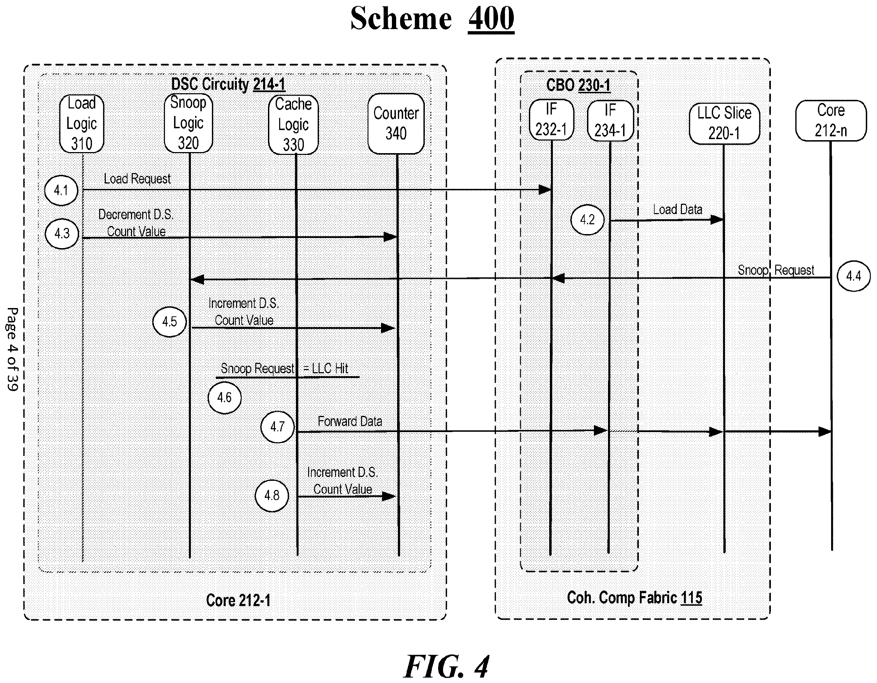

**FIG. 4** illustrates an example scheme 400. According to some examples, logic and/or features of DSC circuitry 214-1 located at or with core 212-1 such as load logic 310, snoop logic 320, cache logic 330 or counter 340 can implement at least portions of scheme 400. Also, elements of coherent compute fabric 115 such as IFs 232-1 and 234-1 included in CBO 230-1 and LLC slice 220-1 can facilitate implementation of the example scheme 400 by the logic and/or features of DSC circuitry 214-1. A core 212-n is shown in FIG. 4 as an example of a non-leader/follower core from among cores 212-2 to 212-8 included in core cluster 112-1 that can submit either a snoop request or a read request to obtain a shared copy of data loaded to LLC slice 220-1. For these examples, LLC slice 220-1 can be allocated to core 212-1 and core 212-1 can serve as a leader core for data stored to LLC slice 220-1 during execution of a workload (e.g., an AI interference workload).

According to some examples, at 4.1, load logic 310 of DSC circuitry 214-1 can detect or observes an indication that core 212-1 has placed a load request to load data to LLC slice 220-1. For these examples, load logic 310 can monitor IF 232-1 at CBO 230-1 to detect when the load request is made by core 212-1 to load data from system memory (e.g., system memory 135).

In some examples, at 4.2, IF 234-1 at CBO 230-1 can be used to facilitate loading of the data obtained from system memory to LLC slice 220-1 responsive to the load request from core 212-1. For these examples, the loaded data can be used by core 212-1 to execute an application workload and this loaded data may also be shared by one or more other cores included in core cluster 112-1 (e.g., as part of a weighted or activation matrix operation).

According to some examples, at 4.3, load logic 310 can cause a data sharing count value maintained in counter 340 of DSC circuitry 214-1 to be decremented by a load count value (e.g., load count value = 1). For these examples, the data sharing count value is decremented because, at this point, the data has yet to be shared. In this regard, core 212-1 has a exclusive copy of the data for use in execution of the workload.

In some examples, at 4.4, core 212-n can send a snoop request to core 212-1 through IF 232-1 of CBO 230-1 to obtain a copy of the data that was loaded to LLC slice 220-1. For these examples, as mentioned above, core 212-1 serves as the leader core for the data that was loaded to LLC slice 220-1.

According to some examples, at 4.5, responsive to the snoop request, snoop logic 320 can cause the data sharing count value maintained at counter 340 to be incremented by a snoop count value (e.g., snoop count value = 1). For these examples, the data sharing count value is to be incremented because, at this point, the data is starting to be shared with other cores.

According to some examples, at 4.6, cache logic 330 of DSC circuitry 214-1 can determine whether the snoop request from core 212-n equates to an LLC hit. For these examples, if the snoop request is to a same memory address that the data loaded at 4.2 was stored to in LLC slice 220-1, the snoop request is deemed as an LLC hit.

In some examples, at 4.7, cache logic 330 can send an indication through IF 234-1 of CBO 230-1 to indicate that a copy of the data loaded to LLC slice 220-1 at 4.2 is to be forwarded to core 212-n. For these examples, the indication that the copy of the data is to be forwarded can be sent through IF 234-1 of CBO 230-1. Also, in some examples, the data sharing count value maintained in counter 340 was below a threshold count value (either before or after being decremented at 4.5) and thus LLC slice 220-1 is placed or maintained in a non-inclusive mode to access the data loaded to LLC slice 220-1.

According to some examples, at 4.8, cache logic 330 can cause the data sharing count value maintained at counter 340 to be incremented by an LLC hit count value that can be based on a total number of LLC slices included in coherency compute fabric 115. For example, as shown in FIG. 2, coherency compute fabric 115 includes 8 LLC slices and therefore the data share count value can be incremented by a value of 8 that is based on the 8 LLC slices included in shared cache 120 of coherency compute fabric 115. The incrementing of the data sharing count value by the total number of LLC slices can indicate that shared data stored in LLC slice 220-1 was consumed by follower core 212-n. This approach of incrementing the data sharing count value by the total number of LLC slices can simplify example scheme 400 since snoops/requests from follower cores can usually be evenly distributed across all LLC slices included in coherency compute fabric 115 when data is shared among cores included in a core cluster to execute an application. In particular, when the application involves a weighted matrix operation to be executed by cores sharing the data. Also, in some examples, even though the data sharing count value was incremented by relatively high value, this may still not be enough to cause the data sharing count value to exceed the threshold count value. Therefore, LLC slice 220-1 can be maintained in a non-inclusive mode to access the data loaded to LLC slice 220-1. However, as described more below, a subsequent read request from a follower core, if it results in an LLC hit to LLC slice 220-1 for the loaded data, can cause LLC slice 220-1 to be switched to an inclusive mode that can enable the follower core to access the loaded data without needing to send a snoop request to core 212-1. Example scheme 400 shown in FIG. 4 may then come to an end.

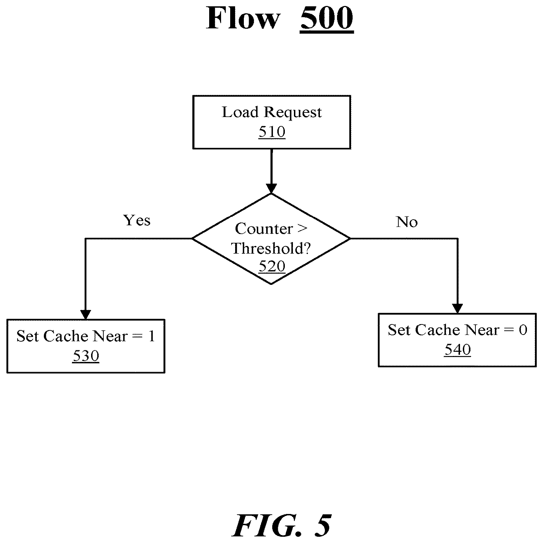

**FIG. 5** illustrates an example flow 500. According to some examples, logic and/or features of DSC circuitry 214-1 such as load logic 310, snoop logic 320, cache logic 330 or counter 340 can implement at least portions of flow 500 in relation to core 212-1 being a leader core as mentioned above for example scheme 400 shown in FIG. 4. For these examples, flow 500 at block 510 can include load logic 310 determining that a load request was generated to load data to LLC slice 220-1 and cause the data sharing count value maintain by counter 340 to be decremented by a load count value. Flow 500 then moves decision block 520 and logic and/or features of DSC circuitry 214-1 such as cache logic 330 can determine whether the data sharing count value is above or below a pre-set or programmable counter threshold value (e.g., greater than +8) following the decrementing of the data sharing count value. If the data sharing count value is higher than the counter threshold value, flow 500 moves to decision block 520. Otherwise, flow 500 moves to block 530.

According to some examples, moving from decision block 520 to block 530, logic and/or features of DSC circuitry 214-1 such as cache logic 330 can add an attribute to the data loaded to LLC slice 220-1 called "cache near". The attribute of "cache near", when set to 1, can serve as a caching hint to fill the data loaded to LLC slice 220-1 responsive to a read request. In other words, setting the cache near to 1 or true causes LLC slice 220-1 to be in an inclusive mode for accessing the loaded data and can be part of implementing a scheme that includes DSI. This inclusive mode as part of the scheme that includes DSI can help to facilitate data sharing between cores without a need to process a large number of snoop requests at leader core 212-1.

In some examples, moving from decision block 520 to block 540, logic and/or features of DSC circuitry 214-1 such as cache logic 330 can set the "cache near" attribute to the load request to 0. The attribute of cache near, when set to 0, can serve as a caching hint to not fill the data loaded to LLC slice 220-1 responsive to a read request. In other words, setting the cache near to 0 or false, puts LLC slice 220-1 in a non-inclusive mode for accessing the loaded data. This non-inclusive mode can include leader core 212-1 processing snoop requests to provide exclusive copies of the data loaded to LLC slice 220-1 to requesting non-leader/follower cores.

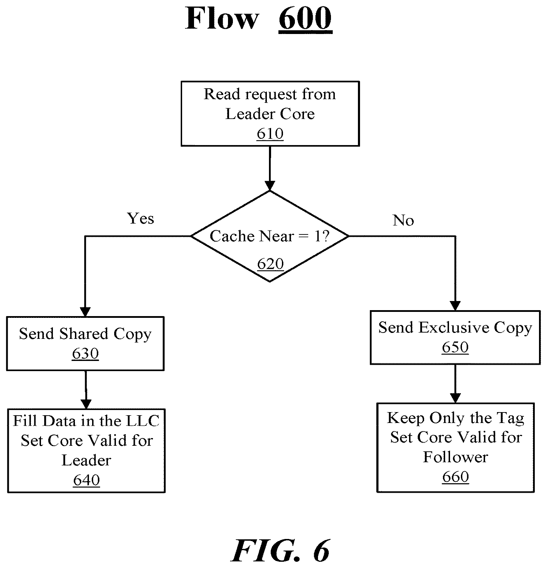

**FIG. 6** illustrates an example flow 600. According to some examples, logic and/or features of DSC circuitry 214-1 such as load logic 310, snoop logic 320, cache logic 330 or counter 340 can implement at least portions of flow 600 in relation to core 212-1 being a leader core as mentioned above for example scheme 400 shown in FIG. 4. Flow 600 can indicate a logic flow from a perspective of leader core 212-1 and its allocated LLC slice 220-1. For these examples, at block 610, a read request from leader core 212-1 can be detected by either load logic 310 or cache logic 330 for leader core 212-1 to read data that is to be loaded to LLC slice 220-1 from system memory. Flow 600 then moves to decision block 620 and based on a cache near attribute for the data loaded to LLC slice 220-1 being set to 1 (e.g., data sharing count value is greater than counter threshold value), flow 600 moves to block 630. Otherwise, flow 600 moves to block 650.

According to some examples, moving from decision block 620 to block 630, logic and/or features of DSC circuitry 214-1 such as cache logic 330 can cause a shared or non-exclusive copy of data to be sent to leader core 212-1. Flow 600 then moves to block 640 and cache logic 330 can cause the data to be filled or loaded to LLC slice 220-1 and a set core valid indication for the loaded data in LLC slice 220-1 can indicate that leader core 212-1 has a valid copy of the requested data.

In some examples, moving from decision block 620 to block 650, logic and/or features of DSC circuitry 214-1 such as cache logic 330 can cause an exclusive copy of the data to be sent to leader core 212-1. Flow 600 then moves to block 660 and cache logic 330 can keep only the tag that tracks the memory address in LLC slice 220-1 (e.g., in a snoop filter) to indicate that leader core 212-1 has the exclusive copy of the data and a set core valid indication can indicate that leader core 212-1 has a valid copy of the requested data.

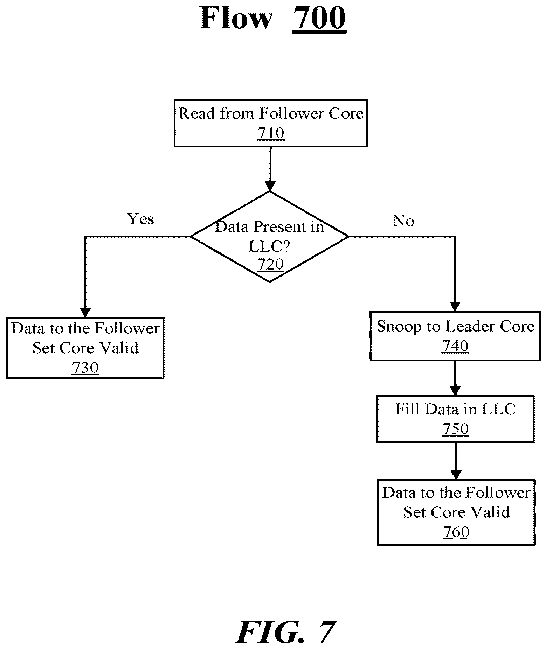

**FIG. 7** illustrates an example flow 700. In some examples, flow 700 can be from a perspective of read requests placed to leader core 212-1's allocated LLC slice 220-1. For these examples, at block 710, a read from a follower core (e.g., from among cores 212-2 to 212-8) can be initiated by the follower core to read data that has been loaded to LLC slice 220-1. Flow 700 then moves to decision block 720 and based on the data to be read being already loaded to LLC slice 220-1, flow 700 moves to block 730. Otherwise, flow 700 moves to block 740.

According to some examples, moving from decision block 720 to block 730, a non-exclusive copy of the data that was loaded to LLC slice 220-1 is sent to the follower core and a set core valid indication can indicate the follower core has a valid copy of the data.

In some examples, moving from decision block 720 to block 740, a snoop is placed by the follower core to leader core 212-1. For these examples, the lack of the data in LLC slice 220-1 can be indication that DSI has yet to be implemented (e.g., data sharing counter is below threshold counter value) and/or leader core 212-1 has yet to receive the requested data from system memory. Flow 700 then moves to block 750 and the data requested by leader core 212-1 is filled to LLC slice 220-1. Then, at block 760, an exclusive copy of the loaded data is sent to the follower core and a set core valid indication can indicate that the follower core has a valid copy of the data.

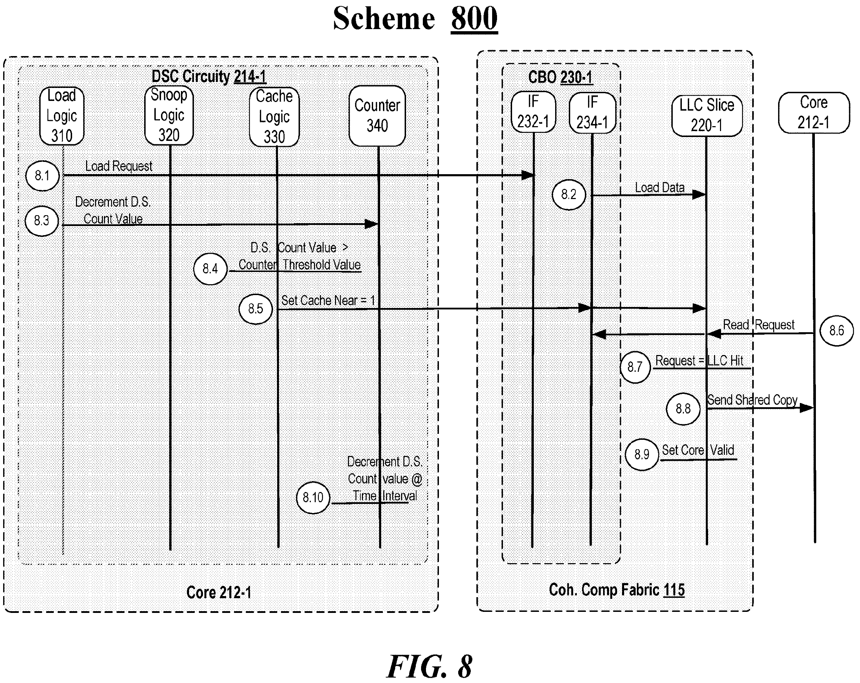

**FIG. 8** illustrates an example scheme 800. According to some examples, similar to example scheme 400 shown in FIG. 4, logic and/or features of DSC circuitry 214-1 located at or with core 212-1 can implement at least portions of scheme 800 that includes DSI. Also, elements of coherent compute fabric 115 such as IFs 232-1 and 234-1 included in CBO 230-1 and LLC slice 220-1 can facilitate implementation of the example scheme 800 by the logic and/or features of DSC circuitry 214-1. Also, similar to example scheme 400 shown in FIG. 4, core 212-n is shown in FIG. 8 as an example of a non-leader/follower core included in core cluster 112-1 that can submit a read request to obtain a shared copy of data loaded to LLC slice 220-1. As mentioned previously, LLC slice 220-1 can be allocated to core 212-1 and core 212-1 can serve as a leader core for data stored to LLC slice 220-1 during execution of a workload (e.g., an AI interference workload).

According to some examples, at 8.1, , load logic 310 of DSC circuitry 214-1 can detect or observes an indication that core 212-1 has placed a load request to load data to LLC slice 220-1. For these examples, load logic 310 can monitor IF 232-1 at CBO 230-1 to detect when the load request is made by core 212-1 to load data from system memory (e.g., system memory 135).

In some examples, at 8.2, IF 234-1 at CBO 230-1 can be used to facilitate loading of the data obtained from system memory to LLC slice 220-1 responsive to the load request from core 212-1. For these examples, the loaded data can be used by core 212-1 to execute an application workload and this loaded data may also be shared by one or more other cores included in core cluster 112-1 (e.g., as part of a weighted or activation matrix operation).

According to some examples, at 8.3, load logic 310 can cause a data sharing count value maintained in counter 340 of DSC circuitry 214-1 to be decremented by a load count value (e.g., load count value = 1). For these examples, the data sharing count value is decremented because, at this point, core 212-1 loading of the data is for core 212-1's use and does not indicate sharing of the data.

In some examples, at 8.4, cache logic 330 of DSC circuitry 214-1 makes a determination that the data sharing count value maintained by counter 340, even after the data sharing count value is decremented by the load count value, is still greater than a counter threshold value.

According to some examples, at 8.5, cache logic 330 can set the "cache near" attribute for the data loaded to LLC slice 220-1. As mentioned above for flow 500, setting the "cache near" attribute can cause LLC slice 220-1 to be placed in an inclusive mode for accessing the loaded data and this placing of LLC slice 220-1 in an inclusive mode for accessing the loaded data can be an important step to initiating/implementing DSI.

In some examples, at 8.6, core 212-n places a read request to read the data that was loaded to LLC slice 220-1 as mentioned above at 8.2. For these examples, at 8.7, the read request to LLC slice 220-1 results in an LLC hit. As a result of the LLC hit, at 8.8, a shared/non-exclusive copy of the data is provided to core 212-n. Then, at 8.9, a set core valid indication is set for LLC slice 220-1 to indicate that follower core 212-n has a valid copy of the data. This direct sending of the data from LLC slice 220-1 can enable non-leader/follower core 212-n to read data directly without needing to send a snoop request to leader core 212-1.

According to some examples, at 8.10, the data sharing count value maintained at counter 340 can be decremented by approximately half following each time interval or period of time expiration. For example, every 100 microseconds, the data sharing count value could be automatically cut in half (e.g., from 8 to 4 and then 4 to 2, etc.). Example scheme 800 shown in FIG. 8 then comes to an end.

Although not shown in FIG. 8, if the data sharing count value drops below the counter threshold value due to decrementing the count value after each time interval and/or due to subsequent load requests from leader core 212-1, cache logic 330 can cause the "cache near" attribute for data stored to LLC slice 220-1 to be de-asserted or set to a value of 0. Setting the "cache near" attribute to a value of 0 can cause LLC slice 220-1 to be placed in a non-inclusive mode for accessing data loaded to LLC slice 220-1 and any subsequent requests from follower cores included in core cluster 112-1 would need to send a snoop request to leader core 121-1 to read that data. In other words, DSI can be stopped for as long as the data sharing count value remains below the threshold count value.

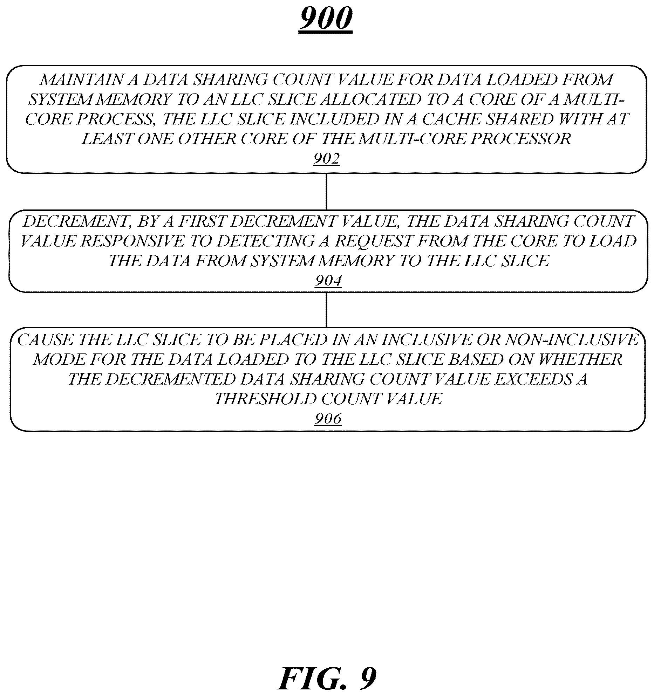

**FIG. 9** illustrates an example logic flow 900. Logic flow 900 is representative of the operations implemented by logic and/or features of circuitry located at or with a core of a multi-core processor, a data sharing count value for data loaded from system memory to an LLC slice allocated to the core, the LLC slice included in a cache shared with at least one other core of the multi-core processor. For example, logic and/or features of DSC circuitry 214-1 located at or with core 212-1 as shown in FIGS. 3, 4 or 8 and the LLC slice 220-1 of shared cache 120 that can be allocated to core 212-1. The logic and/or features of DSC circuitry 214-1 can include, but are not limited to, load logic 310, snoop logic 320, cache logic 330 or counter 340 as shown in FIGS. 3, 4 or 8. In some examples, logic flow 900 can be implemented for the data loaded from system memory (e.g., system memory 135) to the LLC slice (e.g., LLC slice 220-1) include in the cache (e.g., shared cache 120) to be shared between the core (e.g., 212-1) and the at least one other core (e.g., core 212-n) in association with execution of an application workload.

In some examples, as shown in FIG. 9, logic flow 900 at block 902 can maintain a data sharing count value for data loaded from system memory to an LLC slice allocated to a core of a multi-core process, the LLC slice included in a cache shared with at least one other core of the multi-core processor. For these examples, the data can be shared between the core and the at least one other core in association with execution of an application workload. For these examples, counter 340 can maintain the data sharing count value

According to some examples, logic flow 900 at block 904 can decrement, by a first decrement value, the data sharing count value responsive to detecting a request from the core to load the data from system memory to the LLC slice. For these examples, load logic 310 can detect the request to load the data and cause the data sharing count value to be decremented.

In some examples, logic flow 900 at block 906 can cause the LLC slice to be placed in an inclusive or non-inclusive mode for the data loaded to the LLC slice based on whether the decremented data sharing count value exceeds a threshold count value. For these examples, cache logic 330 can cause the LLC slice to be placed in an inclusive or non-inclusive mode for the data loaded to the LLC slice.

The logic flow shown in FIG. 9 can be representative of example methodologies for performing novel aspects described in this disclosure. While, for purposes of simplicity of explanation, the one or more methodologies shown herein are shown and described as a series of acts, those skilled in the art will understand and appreciate that the methodologies are not limited by the order of acts. Some acts can, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology can be required for a novel implementation.

A logic flow can be implemented in software, firmware, and/or hardware. In software and firmware embodiments, a software or logic flow can be implemented by computer executable instructions stored on at least one non-transitory computer readable medium or machine readable medium, such as an optical, magnetic or semiconductor storage. The embodiments are not limited in this context.

Some examples are implemented in one or more computer architectures, cores, accelerators, graphics processing units, FPGAs, etc. Some examples are generated or are IP cores. Some examples utilize emulation and/or translation.

At least some examples of the disclosed technologies can be described in view of the following examples.

Example 1. An example apparatus can include a core of a multi-core processor, the core can be configured to cause a request to load data from system memory to an LLC slice allocated to the core. The LLC slice can be included in a cache shared with at least one other core of the multi-core processor. The data can be shared between the core and the at least one other core in association with execution of an application workload. For this example, the core can include circuitry configured to maintain a data sharing count value. The circuitry can also be configured to cause the data sharing count value to be decremented by a first decrement value responsive to detecting the request to load the data from system memory. The circuitry can also be configured to cause the LLC slice to be placed in an inclusive or non-inclusive mode for the data loaded to the LLC slice based on whether the decremented data sharing count value exceeds a threshold count value.

Example 2. The apparatus of example 1, the core can be a leader core and the at least one other core can be a follower core for access to the data loaded to the LLC slice from system memory.

Example 3. The apparatus of example 2, the inclusive mode can enable the follower core to access the data loaded to the LLC slice from system memory without sending a snoop request to the leader core and the non-inclusive mode can require the follower core to send a snoop request to the leader core before accessing the data loaded to the LLC slice.

Example 4. The apparatus of example 3, when the decremented data sharing count value does not exceed the threshold count value and the LLC slice is placed in the non-inclusive mode, the circuitry can be further configured to cause the data sharing count value to be incremented by an increment value responsive to detecting a snoop request from the follower core that is an LLC hit for the data loaded to the LLC slice from system memory. The circuitry can also be further configured to cause the LLC slice to be placed in the inclusive or the non-inclusive mode for the data loaded to the LLC slice from system memory based on whether the incremented data sharing count value exceeds the threshold count value.

Example 5. The apparatus of example 4, the increment value can be based on a number of separate LLC slices included in the cache shared with the at least one other core of the multi-core processor.

Example 6. The apparatus of example 3, when the decremented data sharing count value exceeds the threshold count value and the LLC slice is placed in the inclusive mode, the circuitry can be further configured to set an attribute for the data loaded to the LLC slice to indicate the LLC slice is placed in the inclusive mode such that responsive to a read request from the follower core that is an LLC hit for the data loaded to the LLC slice from system memory. A copy of the data loaded to the LLC slice can be provided to the follower core without requiring a snoop request to the leader core.

Example 7. The apparatus of example 1, the circuitry can be further configured to cause the data sharing count value to be decremented by a second decrement value responsive to an expiration of a period of time.

Example 8. The apparatus of example 1, execution of the application workload can include a weighted matrix operation that includes the core and the at least one other core sharing the data loaded to the LLC slice to complete the weighted matrix operation.

Example 9. An example method can include maintaining, at circuitry located at or with a core of a multi-core processor, a data sharing count value for data loaded from system memory to an LLC slice allocated to the core. The LLC slice can be included in a cache shared with at least one other core of the multi-core processor. The data can be shared between the core and the at least one other core in association with execution of an application workload. The method can also include decrementing, by a first decrement value, the data sharing count value responsive to detecting a request from the core to load the data from system memory to the LLC slice. The method can also include causing the LLC slice to be placed in an inclusive or non-inclusive mode for the data loaded to the LLC slice based on whether the decremented data sharing count value exceeds a threshold count value.

Example 10. The method of example 9, the core can be a leader core and the at least one other core can be a follower core for accessing the data loaded to the LLC slice from system memory.

Example 11. The method of example 10, the inclusive mode can enable the follower core to access the data loaded to the LLC slice from system memory without sending a snoop request to the leader core and the non-inclusive mode can require the follower core to send a snoop request to the leader core before accessing the data loaded to the LLC slice.

Example 12. The method of example 11, when the decremented data sharing count value does not exceed the threshold count value and the LLC slice is placed in the non-inclusive mode, the method can further include causing the data sharing count value to be incremented by an increment value responsive to detecting a snoop request from the follower core that is an LLC hit for the data loaded to the LLC slice from system memory. The method can also further include causing the LLC slice to be placed in the inclusive or the non-inclusive mode for the data loaded to the LLC slice from system memory based on whether the incremented data sharing count value exceeds the threshold count value.

Example 13. The method of example 12, the increment value can be based on a number of separate LLC slices included in the cache shared with the at least one other core of the multi-core processor.

Example 14. The method of example 11, when the decremented data sharing count value exceeds the threshold count value and the LLC slice is placed in the inclusive mode, the method can further include setting an attribute for the data loaded to the LLC slice to indicate the LLC slice is placed in the inclusive mode such that responsive to a read request from the follower core that is an LLC hit for the data loaded to the LLC slice from system memory. A copy of the data loaded to the LLC slice can be provided to the follower core without requiring a snoop request to the leader core.

Example 15. The method of example 9 can also include causing the data sharing count value to be decremented by a second decrement value responsive to an expiration of a period of time.

Example 16. The method of example 9, execution of the application workload can include a weighted matrix operation that includes the core and the at least one other core sharing the data loaded to the LLC slice to complete the weighted matrix operation.

Example 17. An example at least one machine readable medium can include a plurality of instructions that in response to being executed by circuitry located at or with a core of a multi-core processor, can cause the circuitry to maintain a data sharing count value for data loaded from system memory to an LLC slice allocated to the core. The LLC slice can be included in a cache shared with at least one other core of the multi-core processor. The data can be shared between the core and the at least one other core in association with execution of an application workload. The instructions can also cause the circuitry to decrement, by a first decrement value, the data sharing count value responsive to detecting a request from the core to load the data from system memory to the LLC slice. The instructions can also cause the circuitry to cause the LLC slice to be placed in an inclusive or non-inclusive mode for the data loaded to the LLC slice based on whether the decremented data sharing count value exceeds a threshold count value.

Example 18. The at least one machine readable medium of example 17, the core can be a leader core and the at least one other core can be a follower core for accessing the data loaded to the LLC slice from system memory.

Example 19. The at least one machine readable medium of example 18, the inclusive mode can enable the follower core to access the data loaded to the LLC slice from system memory without sending a snoop request to the leader core and the non-inclusive mode can require the follower core to send a snoop request to the leader core before accessing the data loaded to the LLC slice.

Example 20. The at least one machine readable medium of example 19, when the decremented data sharing count value does not exceed the threshold count value and the LLC slice is placed in the non-inclusive mode, the instructions can further cause the circuitry to cause the data sharing count value to be incremented by an increment value responsive to detecting a snoop request from the follower core that is an LLC hit for the data loaded to the LLC slice from system memory. The instructions can also further cause the circuitry to cause the LLC slice to be placed in the inclusive or the non-inclusive mode for the data loaded to the LLC slice from system memory based on whether the incremented data sharing count value exceeds the threshold count value.

Example 21. The at least one machine readable medium of example 20, the increment value can be based on a number of separate LLC slices included in the cache shared with the at least one other core of the multi-core processor.

Example 22. The at least one machine readable medium of example 19, when the decremented data sharing count value exceeds the threshold count value and the LLC slice is placed in the inclusive mode, the instructions can further cause the circuitry to set an attribute for the data loaded to the LLC slice to indicate the LLC slice is placed in the inclusive mode such that responsive to a read request from the follower core that is an LLC hit for the data loaded to the LLC slice from system memory. A copy of the data loaded to the LLC slice can be provided to the follower core without requiring a snoop request to the leader core.

Example 23. The at least one machine readable medium of example 17, the instructions can further cause the circuitry to cause the data sharing count value to be decremented by a second decrement value responsive to an expiration of a period of time.

Example 24. The at least one machine readable medium of example 17, execution of the application workload can include a weighted matrix operation that includes the core and the at least one other core sharing the data loaded to the LLC slice to complete the weighted matrix operation.

Example 25. An example system can include a coherency compute fabric to include a shared cache. The shared cache can include a plurality of LLC slices separately allocated to individual cores from among a plurality of cores of a core cluster. The system can also include a core from among the plurality of cores. The core can be configured to cause a request to load data from system memory to an LLC slice from among the plurality of LLC slices that is allocated to the core. The data can be shared between the core and at least one other core from among the plurality of cores of the core cluster. The data can be shared in association with execution of an application workload. For this example, the core can include circuitry configured to maintain a data sharing count value. The circuitry can also be configured to cause the data sharing count value to be decremented by a first decrement value responsive to detecting the request to load the data from system memory. The circuitry can also be configured to cause the LLC slice to be placed in an inclusive or non-inclusive mode for the data loaded to the LLC slice based on whether the decremented data sharing count value exceeds a threshold count value.

Example 26. The system of example 25, the core can be a leader core and the at least one other core can be a follower core for access to the data loaded to the LLC slice from system memory.

Example 27. The system of example 26, the inclusive mode can enable the follower core to access the data loaded to the LLC slice from system memory without sending a snoop request to the leader core and the non-inclusive mode can require the follower core to send a snoop request to the leader core before accessing the data loaded to the LLC slice.

Example 28. The system of example 27, when the decremented data sharing count value does not exceed the threshold count value and the LLC slice is placed in the non-inclusive mode, the circuitry can be further configured to cause the data sharing count value to be incremented by an increment value responsive to detecting a snoop request from the follower core that is an LLC hit for the data loaded to the LLC slice from system memory. The circuitry can also be further configured to cause the LLC slice to be placed in the inclusive or the non-inclusive mode for the data loaded to the LLC slice from system memory based on whether the incremented data sharing count value exceeds the threshold count value.

Example 29. The system of example 28, the increment value can be based on a number of separate LLC slices included in the shared cache.

Example 30. The system of example 27, when the decremented data sharing count value exceeds the threshold count value and the LLC slice is placed in the inclusive mode, the circuitry can be further configured to set an attribute for the data loaded to the LLC slice to indicate the LLC slice is placed in the inclusive mode such that responsive to a read request from the follower core that is an LLC hit for the data loaded to the LLC slice from system memory. A copy of the data loaded to the LLC slice can be provided to the follower core without requiring a snoop request to the leader core.

Example 31. The system of example 25, the circuitry can be further configured to cause the data sharing count value to be decremented by a second decrement value responsive to an expiration of a period of time.

Example 32. The system of example 25, execution of the application workload can include a weighted matrix operation that includes the core and the at least one other core sharing the data loaded to the LLC slice to complete the weighted matrix operation.

### Example Systems

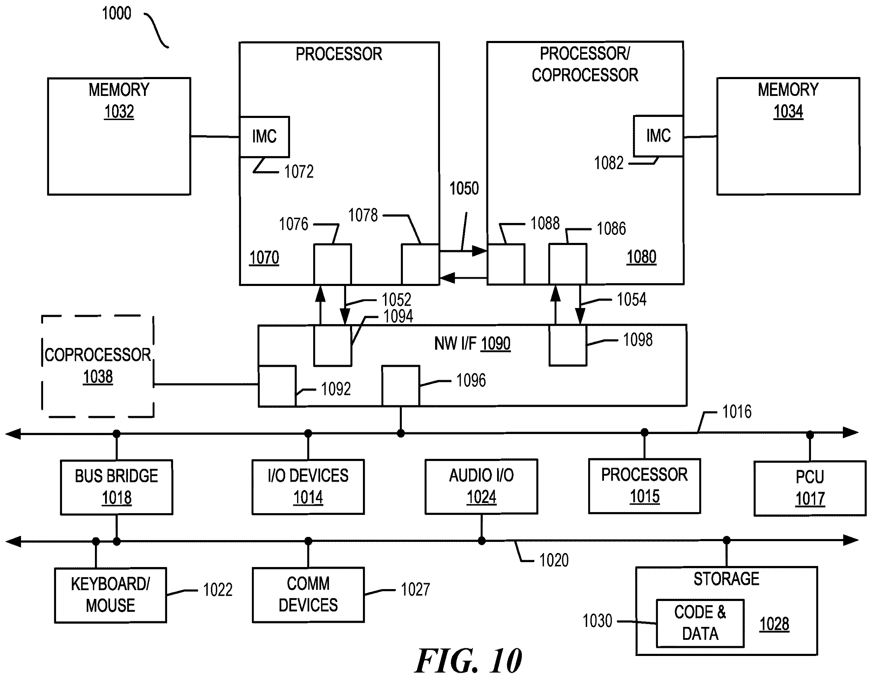

FIG. 10 illustrates an example computing system. Multiprocessor system 1000 is an interfaced system and includes a plurality of processors or cores including a first processor 1070 and a second processor 1080 coupled via an interface 1050 such as a point-to-point (P-P) interconnect, a fabric, and/or bus. In some examples, the first processor 1070 and the second processor 1080 are homogeneous. In some examples, first processor 1070 and the second processor 1080 are heterogenous. Though the example multiprocessor system 1000 is shown to have two processors, the system may have three or more processors, or may be a single processor system. In some examples, the computing system is a system on a chip (SoC).

Processors 1070 and 1080 are shown including integrated memory controller (IMC) circuitry 1072 and 1082, respectively. Processor 1070 also includes interface circuits 1076 and 1078; similarly, second processor 1080 includes interface circuits 1086 and 1088. Processors 1070, 1080 may exchange information via the interface 1050 using interface circuits 1078, 1088. IMCs 1072 and 1082 couple the processors 1070, 1080 to respective memories, namely a memory 1032 and a memory 1034, which may be portions of main memory locally attached to the respective processors.

Processors 1070, 1080 may each exchange information with a network interface (NW I/F) 1090 via individual interfaces 1052, 1054 using interface circuits 1076, 1094, 1086, 1098. The network interface 1090 (e.g., one or more of an interconnect, bus, and/or fabric, and in some examples is a chipset) may optionally exchange information with a co-processor 1038 via an interface circuit 1092. In some examples, the co-processor 1038 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 1070, 1080 or outside of both processors, yet connected with the processors via an interface such as P-P interconnect, such that either or both processors' local cache information may be stored in the shared cache if a processor is placed into a low power mode.

Network interface 1090 may be coupled to a first interface 1016 via interface circuit 1096. In some examples, first interface 1016 may be an interface such as a Peripheral Component Interconnect (PCI) interconnect, a PCI Express interconnect or another I/O interconnect. In some examples, first interface 1016 is coupled to a power control unit (PCU) 1017, which may include circuitry, software, and/or firmware to perform power management operations with regard to the processors 1070, 1080 and/or co-processor 1038. PCU 1017 provides control information to a voltage regulator (not shown) to cause the voltage regulator to generate the appropriate regulated voltage. PCU 1017 also provides control information to control the operating voltage generated. In various examples, PCU 1017 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1017 is illustrated as being present as logic separate from the processor 1070 and/or processor 1080. In other cases, PCU 1017 may execute on a given one or more of cores (not shown) of processor 1070 or 1080. In some cases, PCU 1017 may be implemented as a microcontroller (dedicated or general-purpose) or other control logic configured to execute its own dedicated power management code, sometimes referred to as P-code. In yet other examples, power management operations to be performed by PCU 1017 may be implemented externally to a processor, such as by way of a separate power management integrated circuit (PMIC) or another component external to the processor. In yet other examples, power management operations to be performed by PCU 1017 may be implemented within BIOS or other system software.

Various I/O devices 1014 may be coupled to first interface 1016, along with a bus bridge 1018 which couples first interface 1016 to a second interface 1020. In some examples, one or more additional processor(s) 1015, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 1016. In some examples, second interface 1020 may be a low pin count (LPC) interface. Various devices may be coupled to second interface 1020 including, for example, a keyboard and/or mouse 1022, communication devices 1027 and storage circuitry 1028. Storage circuitry 1028 may be one or more non-transitory machine-readable storage media as described below, such as a disk drive or other mass storage device which may include instructions/code and data 1030 and may implement the storage 'ISAB03 in some examples. Further, an audio I/O 1024 may be coupled to second interface 1020. Note that other architectures than the point-to-point architecture described above are possible. For example, instead of the point-to-point architecture, a system such as multiprocessor system 1000 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

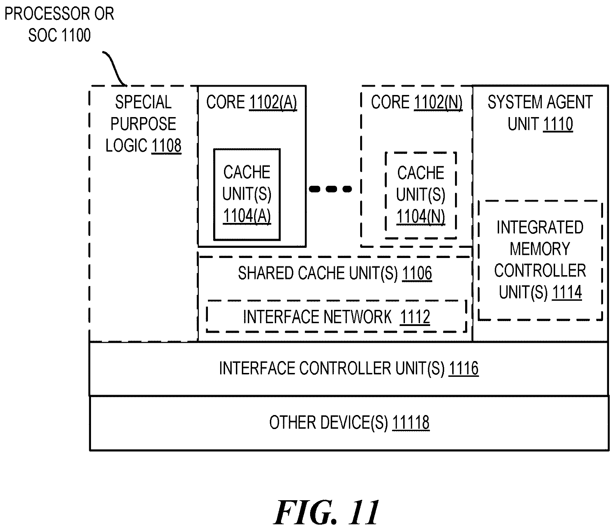

**FIG. 11** illustrates a block diagram of an example processor and/or SoC 1100 that may have one or more cores and an integrated memory controller. The solid lined boxes illustrate a processor and/or SoC 1100 with a single core 1102(A), system agent unit circuitry 1110, and a set of one or more interface controller unit(s) circuitry 1116, while the optional addition of the dashed lined boxes illustrates an alternative processor and/or SoC 1100 with multiple cores 1102(A)-(N), a set of one or more integrated memory controller unit(s) circuitry 1114 in the system agent unit circuitry 1110, and special purpose logic 1108, as well as a set of one or more interface controller unit(s) circuitry 1116. Note that the processor and/or SoC 1100 may be one of the processors 1070 or 1080, or co-processor 1038 or 1015 of FIG. 10.

Thus, different implementations of the processor and/or SoC 1100 may include: 1) a CPU with the special purpose logic 1108 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like(which may include one or more cores, not shown), and the cores 1102(A)-(N) being one or more general purpose cores (e.g., general purpose in-order cores, general purpose out-of-order cores, or a combination of the two); 2) a co-processor with the cores 1102(A)-(N) being a large number of special purpose cores intended primarily for graphics and/or scientific (throughput); and 3) a co-processor with the cores 1102(A)-(N) being a large number of general purpose in-order cores. Thus, the processor and/or SoC 1100 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 1100 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1104(A)-(N) within the cores 1102(A)-(N), a set of one or more shared cache unit(s) circuitry 1106, and external memory (not shown) coupled to the set of integrated memory controller unit(s) circuitry 1114. The set of one or more shared cache unit(s) circuitry 1106 may include one or more mid-level caches, such as level 2 (L2), level 3 (L3), level 4 (L4), or other levels of cache, such as a last level cache (LLC), and/or combinations thereof. While in some examples interface network circuitry 1112 (e.g., a ring interconnect) interfaces the special purpose logic 1108 (e.g., integrated graphics logic), the set of shared cache unit(s) circuitry 1106, and the system agent unit circuitry 1110, alternative examples use any number of well-known techniques for interfacing such units. In some examples, coherency is maintained between one or more of the shared cache unit(s) circuitry 1106 and cores 1102(A)-(N). In some examples, interface controller unit(s) circuitry 1116 couple the cores 1102(A)-(N) to one or more other devices 1118 such as one or more I/O devices, storage, one or more communication devices (e.g., wireless networking, wired networking, etc.), etc.

In some examples, one or more of the cores 1102(A)-(N) are capable of multi-threading. The system agent unit circuitry 1110 includes those components coordinating and operating cores 1102(A)-(N). The system agent unit circuitry 1110 may include, for example, power control unit (PCU) circuitry and/or display unit circuitry (not shown). The PCU may be or may include logic and components needed for regulating the power state of the cores 1102(A)-(N) and/or the special purpose logic 1108 (e.g., integrated graphics logic). The display unit circuitry is for driving one or more externally connected displays.

The cores 1102(A)-(N) may be homogenous in terms of instruction set architecture (ISA). Alternatively, the cores 1102(A)-(N) may be heterogeneous in terms of ISA; that is, a subset of the cores 1102(A)-(N) may be capable of executing an ISA, while other cores may be capable of executing only a subset of that ISA or another ISA.

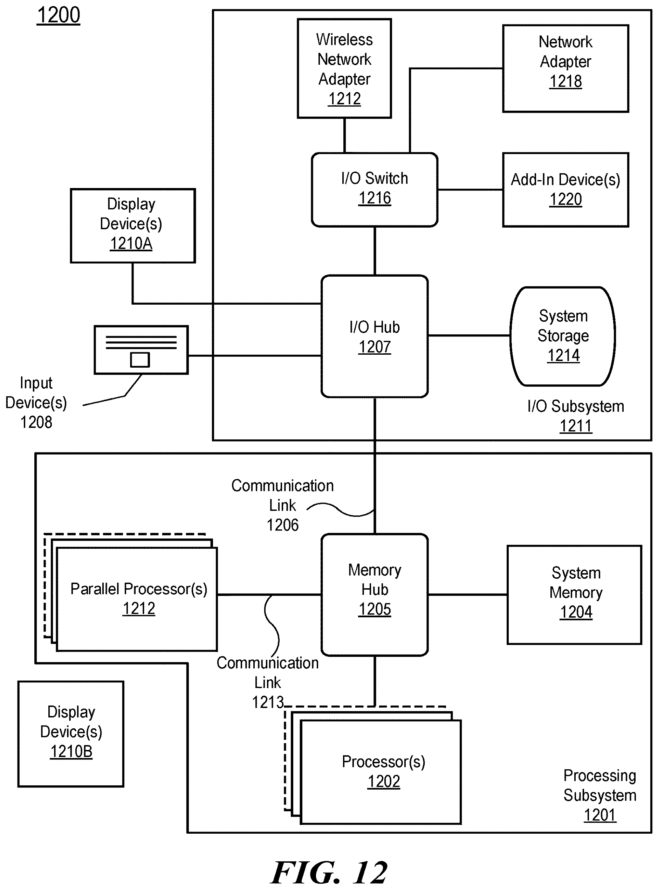

**FIG. 12** is a block diagram illustrating a computing system 1200 configured to implement one or more aspects of the examples described herein. The computing system 1200 includes a processing subsystem 1201 having one or more processor(s) 1202 and a system memory 1204 communicating via an interconnection path that may include a memory hub 1205. The memory hub 1205 may be a separate component within a chipset component or may be integrated within the one or more processor(s) 1202. The memory hub 1205 couples with an I/O subsystem 1211 via a communication link 1206. The I/O subsystem 1211 includes an I/O hub 1207 that can enable the computing system 1200 to receive input from one or more input device(s) 1208. Additionally, the I/O hub 1207 can enable a display controller, which may be included in the one or more processor(s) 1202, to provide outputs to one or more display device(s) 1210A. In some examples the one or more display device(s) 1210A coupled with the I/O hub 1207 can include a local, internal, or embedded display device.

The processing subsystem 1201, for example, includes one or more parallel processor(s) 1212 coupled to memory hub 1205 via a bus or communication link 1213. The communication link 1213 may be one of any number of standards-based communication link technologies or protocols, such as, but not limited to PCI Express, or may be a vendor specific communications interface or communications fabric. The one or more parallel processor(s) 1212 may form a computationally focused parallel or vector processing system that can include a large number of processing cores and/or processing clusters, such as a many integrated core (MIC) processor. For example, the one or more parallel processor(s) 1212 form a graphics processing subsystem that can output pixels to one of the one or more display device(s) 1210A coupled via the I/O hub 1207. The one or more parallel processor(s) 1212 can also include a display controller and display interface (not shown) to enable a direct connection to one or more display device(s) 1210B.

Within the I/O subsystem 1211, a system storage unit 1214 can connect to the I/O hub 1207 to provide a storage mechanism for the computing system 1200. An I/O switch 1216 can be used to provide an interface mechanism to enable connections between the I/O hub 1207 and other components, such as a network adapter 1218 and/or wireless network adapter 1219 that may be integrated into the platform, and various other devices that can be added via one or more add-in device(s) 1220. The add-in device(s) 1220 may also include, for example, one or more external graphics processor devices, graphics cards, and/or compute accelerators. The network adapter 1218 can be an Ethernet adapter or another wired network adapter. The wireless network adapter 1219 can include one or more of a Wi-Fi, Bluetooth, near field communication (NFC), or other network device that includes one or more wireless radios.

The computing system 1200 can include other components not explicitly shown, including USB or other port connections, optical storage drives, video capture devices, and the like, which may also be connected to the I/O hub 1207. Communication paths interconnecting the various components in FIG. 12 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1212 may incorporate circuitry optimized for graphics and video processing, including, for example, video output circuitry, and constitutes a graphics processing unit (GPU). Alternatively or additionally, the one or more parallel processor(s) 1212 can incorporate circuitry optimized for general purpose processing, while preserving the underlying computational architecture, described in greater detail herein. Components of the computing system 1200 may be integrated with one or more other system elements on a single integrated circuit. For example, the one or more parallel processor(s) 1212, memory hub 1205, processor(s) 1202, and I/O hub 1207 can be integrated into a system on chip (SoC) integrated circuit. Alternatively, the components of the computing system 1200 can be integrated into a single package to form a system in package (SIP) configuration. In some examples at least a portion of the components of the computing system 1200 can be integrated into a multi-chip module (MCM), which can be interconnected with other multi-chip modules into a modular computing system.

It will be appreciated that the computing system 1200 shown herein is illustrative and that variations and modifications are possible. The connection topology, including the number and arrangement of bridges, the number of processor(s) 1202, and the number of parallel processor(s) 1212, may be modified as desired. For instance, system memory 1204 can be connected to the processor(s) 1202 directly rather than through a bridge, while other devices communicate with system memory 1204 via the memory hub 1205 and the processor(s) 1202. In other alternative topologies, the parallel processor(s) 1212 are connected to the I/O hub 1207 or directly to one of the one or more processor(s) 1202, rather than to the memory hub 1205. In other examples, the I/O hub 1207 and memory hub 1205 may be integrated into a single chip. It is also possible that two or more sets of processor(s) 1202 are attached via multiple sockets, which can couple with two or more instances of the parallel processor(s) 1212.

Some of the particular components shown herein are optional and may not be included in all implementations of the computing system 1200. For example, any number of add-in cards or peripherals may be supported, or some components may be eliminated. Furthermore, some architectures may use different terminology for components similar to those illustrated in FIG. 12. For example, the memory hub 1205 may be referred to as a Northbridge in some architectures, while the I/O hub 1207 may be referred to as a Southbridge.

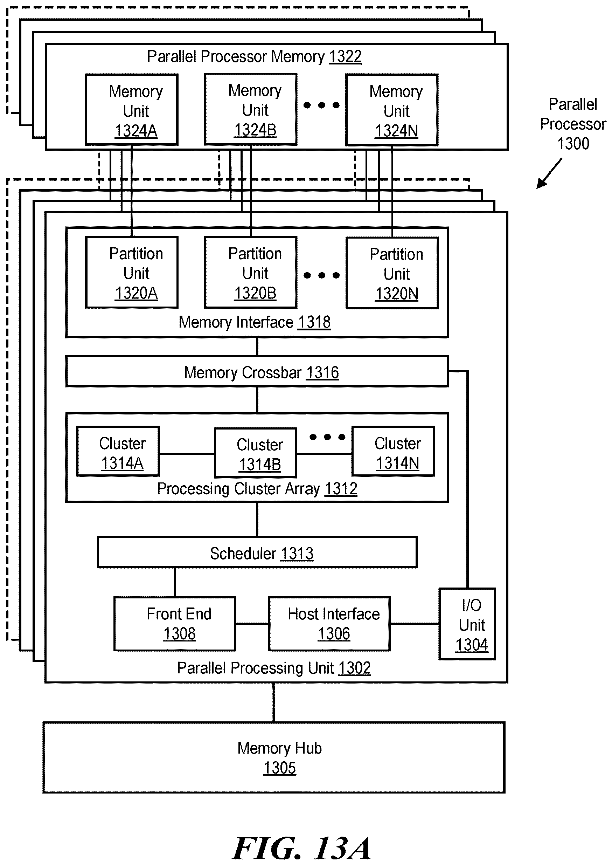

**FIG. 13A** illustrates examples of a parallel processor 1300. The parallel processor 1300 may be a GPU, GPGPU or the like as described herein. The various components of the parallel processor 1300 may be implemented using one or more integrated circuit devices, such as programmable processors, application specific integrated circuits (ASICs), or field programmable gate arrays (FPGA). The parallel processor 1300 may be one or more of the parallel processor(s) 1212 shown in FIG. 12.

The parallel processor 1300 includes a parallel processing unit 1302. The parallel processing unit includes an I/O unit 1304 that enables communication with other devices, including other instances of the parallel processing unit 1302. The I/O unit 1304 may be directly connected to other devices. For instance, the I/O unit 1304 connects with other devices via the use of a hub or switch interface, such as memory hub 1205. The connections between the memory hub 1205 and the I/O unit 1304 form a communication link 1213. Within the parallel processing unit 1302, the I/O unit 1304 connects with a host interface 1306 and a memory crossbar 1316, where the host interface 1306 receives commands directed to performing processing operations and the memory crossbar 1316 receives commands directed to performing memory operations.

When the host interface 1306 receives a command buffer via the I/O unit 1304, the host interface 1306 can direct work operations to perform those commands to a front end 1308. In some examples the front end 1308 couples with a scheduler 1310, which is configured to distribute commands or other work items to a processing cluster array 1312. The scheduler 1310 ensures that the processing cluster array 1312 is properly configured and in a valid state before tasks are distributed to the processing clusters of the processing cluster array 1312. The scheduler 1310 may be implemented via firmware logic executing on a microcontroller. The microcontroller implemented scheduler 1310 is configurable to perform complex scheduling and work distribution operations at coarse and fine granularity, enabling rapid preemption and context switching of threads executing on the processing cluster array 1312. Preferably, the host software can prove workloads for scheduling on the processing cluster array 1312 via one of multiple graphics processing doorbells. In other examples, polling for new workloads or interrupts can be used to identify or indicate availability of work to perform. The workloads can then be automatically distributed across the processing cluster array 1312 by the scheduler 1310 logic within the scheduler microcontroller.

The processing cluster array 1312 can include up to "N" processing clusters (e.g., cluster 1314A, cluster 1314B, through cluster 1314N). Each cluster 1314A-1314N of the processing cluster array 1312 can execute a large number of concurrent threads. The scheduler 1310 can allocate work to the clusters 1314A-1314N of the processing cluster array 1312 using various scheduling and/or work distribution algorithms, which may vary depending on the workload arising for each type of program or computation. The scheduling can be handled dynamically by the scheduler 1310 or can be assisted in part by compiler logic during compilation of program logic configured for execution by the processing cluster array 1312. Optionally, different clusters 1314A-1314N of the processing cluster array 1312 can be allocated for processing different types of programs or for performing different types of computations.

The processing cluster array 1312 can be configured to perform various types of parallel processing operations. For example, the processing cluster array 1312 is configured to perform general-purpose parallel compute operations. For example, the processing cluster array 1312 can include logic to execute processing tasks including filtering of video and/or audio data, performing modeling operations, including physics operations, and performing data transformations.

The processing cluster array 1312 is configured to perform parallel graphics processing operations. In such examples in which the parallel processor 1300 is configured to perform graphics processing operations, the processing cluster array 1312 can include additional logic to support the execution of such graphics processing operations, including, but not limited to texture sampling logic to perform texture operations, as well as tessellation logic and other vertex processing logic. Additionally, the processing cluster array 1312 can be configured to execute graphics processing related shader programs such as, but not limited to vertex shaders, tessellation shaders, geometry shaders, and pixel shaders. The parallel processing unit 1302 can transfer data from system memory via the I/O unit 1304 for processing. During processing the transferred data can be stored to on-chip memory (e.g., parallel processor memory 1322) during processing, then written back to system memory.

In examples in which the parallel processing unit 1302 is used to perform graphics processing, the scheduler 1310 may be configured to divide the processing workload into approximately equal sized tasks, to better enable distribution of the graphics processing operations to multiple clusters 1314A-1314N of the processing cluster array 1312. In some of these examples, portions of the processing cluster array 1312 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1314A-1314N may be stored in buffers to allow the intermediate data to be transmitted between clusters 1314A-1314N for further processing.

During operation, the processing cluster array 1312 can receive processing tasks to be executed via the scheduler 1310, which receives commands defining processing tasks from front end 1308. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1310 may be configured to fetch the indices corresponding to the tasks or may receive the indices from the front end 1308. The front end 1308 can be configured to ensure the processing cluster array 1312 is configured to a valid state before the workload specified by incoming command buffers (e.g., batch-buffers, push buffers, etc.) is initiated.

Each of the one or more instances of the parallel processing unit 1302 can couple with parallel processor memory 1322. The parallel processor memory 1322 can be accessed via the memory crossbar 1316, which can receive memory requests from the processing cluster array 1312 as well as the I/O unit 1304. The memory crossbar 1316 can access the parallel processor memory 1322 via a memory interface 1318. The memory interface 1318 can include multiple partition units (e.g., partition unit 1320A, partition unit 1320B, through partition unit 1320N) that can each couple to a portion (e.g., memory unit) of parallel processor memory 1322. The number of partition units 1320A-1320N may be configured to be equal to the number of memory units, such that a first partition unit 1320A has a corresponding first memory unit 1324A, a second partition unit 1320B has a corresponding second memory unit 1324B, and an Nth partition unit 1320N has a corresponding Nth memory unit 1324N. In other examples, the number of partition units 1320A-1320N may not be equal to the number of memory devices.

The memory units 1324A-1324N can include various types of memory devices, including dynamic random-access memory (DRAM) or graphics random access memory, such as synchronous graphics random access memory (SGRAM), including graphics double data rate (GDDR) memory. Optionally, the memory units 1324A-1324N may also include 3D stacked memory, including but not limited to high bandwidth memory (HBM). Persons skilled in the art will appreciate that the specific implementation of the memory units 1324A-1324N can vary and can be selected from one of various conventional designs. Render targets, such as frame buffers or texture maps may be stored across the memory units 1324A-1324N, allowing partition units 1320A-1320N to write portions of each render target in parallel to efficiently use the available bandwidth of parallel processor memory 1322. In some examples, a local instance of the parallel processor memory 1322 may be excluded in favor of a unified memory design that utilizes system memory in conjunction with local cache memory.

Optionally, any one of the clusters 1314A-1314N of the processing cluster array 1312 has the ability to process data that will be written to any of the memory units 1324A-1324N within parallel processor memory 1322. The memory crossbar 1316 can be configured to transfer the output of each cluster 1314A-1314N to any partition unit 1320A-1320N or to another cluster 1314A-1314N, which can perform additional processing operations on the output. Each cluster 1314A-1314N can communicate with the memory interface 1318 through the memory crossbar 1316 to read from or write to various external memory devices. In one of the examples with the memory crossbar 1316 the memory crossbar 1316 has a connection to the memory interface 1318 to communicate with the I/O unit 1304, as well as a connection to a local instance of the parallel processor memory 1322, enabling the processing units within the different processing clusters 1314A-1314N to communicate with system memory or other memory that is not local to the parallel processing unit 1302. Generally, the memory crossbar 1316 may, for example, be able to use virtual channels to separate traffic streams between the clusters 1314A-1314N and the partition units 1320A-1320N.

While a single instance of the parallel processing unit 1302 is illustrated within the parallel processor 1300, any number of instances of the parallel processing unit 1302 can be included. For example, multiple instances of the parallel processing unit 1302 can be provided on a single add-in card, or multiple add-in cards can be interconnected. For example, the parallel processor 1300 can be an add-in device, such as add-in device(s) 1220 of FIG. 12, which may be a graphics card such as a discrete graphics card that includes one or more GPUs, one or more memory devices, and device-to-device or network or fabric interfaces. The different instances of the parallel processing unit 1302 can be configured to inter-operate even if the different instances have different numbers of processing cores, different amounts of local parallel processor memory, and/or other configuration differences. Optionally, some instances of the parallel processing unit 1302 can include higher precision floating point units relative to other instances. Systems incorporating one or more instances of the parallel processing unit 1302 or the parallel processor 1300 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1302 can be partitioned into multiple instances. Those multiple instances can be configured to execute workloads associated with different clients in an isolated manner, enabling a pre-determined quality of service to be provided for each client. For example, each cluster 1314A-1314N can be compartmentalized and isolated from other clusters, allowing the processing cluster array 1312 to be divided into multiple compute partitions or instances. In such configuration, workloads that execute on an isolated partition are protected from faults or errors associated with a different workload that executes on a different partition. The partition units 1320A-1320N can be configured to enable a dedicated and/or isolated path to memory for the clusters 1314A-1314N associated with the respective compute partitions. This datapath isolation enables the compute resources within a partition can communicate with one or more assigned memory units 1324A-1324N without being subjected to inference by the activities of other partitions.

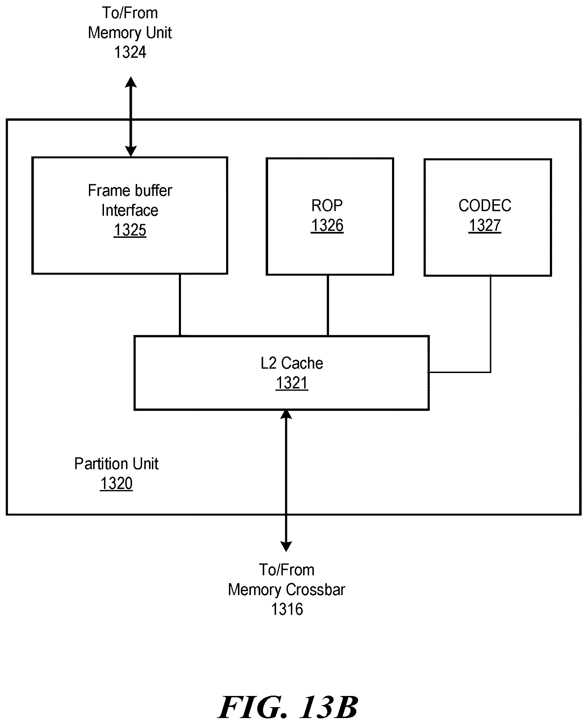

**FIG. 13B** is a block diagram of a partition unit 1320. The partition unit 1320 may be an instance of one of the partition units 1320A-1320N of FIG. 13A. As illustrated, the partition unit 1320 includes an L2 cache 1321, a frame buffer interface 1325, and a ROP 1326 (raster operations unit). The L2 cache 1321 is a read/write cache that is configured to perform load and store operations received from the memory crossbar 1316 and ROP 1326. Read misses and urgent write-back requests are output by L2 cache 1321 to frame buffer interface 1325 for processing. Updates can also be sent to the frame buffer via the frame buffer interface 1325 for processing. In some examples the frame buffer interface 1325 interfaces with one of the memory units in parallel processor memory, such as the memory units 1324A-1324N of FIG. 13A (e.g., within parallel processor memory 1322). The partition unit 1320 may additionally or alternatively also interface with one of the memory units in parallel processor memory via a memory controller (not shown).

In graphics applications, the ROP 1326 is a processing unit that performs raster operations such as stencil, z test, blending, and the like. The ROP 1326 then outputs processed graphics data that is stored in graphics memory. In some examples the ROP 1326 includes or couples with a CODEC 1327 that includes compression logic to compress depth or color data that is written to memory or the L2 cache 1321 and decompress depth or color data that is read from memory or the L2 cache 1321. The compression logic can be lossless compression logic that makes use of one or more of multiple compression algorithms. The type of compression that is performed by the CODEC 1327 can vary based on the statistical characteristics of the data to be compressed. For example, in some examples, delta color compression is performed on depth and color data on a per-tile basis. In some examples the CODEC 1327 includes compression and decompression logic that can compress and decompress compute data associated with machine learning operations. The CODEC 1327 can, for example, compress sparse matrix data for sparse machine learning operations. The CODEC 1327 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1326 may be included within each processing cluster (e.g., cluster 1314A-1314N of FIG. 13A) instead of within the partition unit 1320. In such example, read and write requests for pixel data are transmitted over the memory crossbar 1316 instead of pixel fragment data. The processed graphics data may be displayed on a display device, such as one of the one or more display device(s) 1210A-1210B of FIG. 12, routed for further processing by the processor(s) 1202, or routed for further processing by one of the processing entities within the parallel processor 1300 of FIG. 13A.

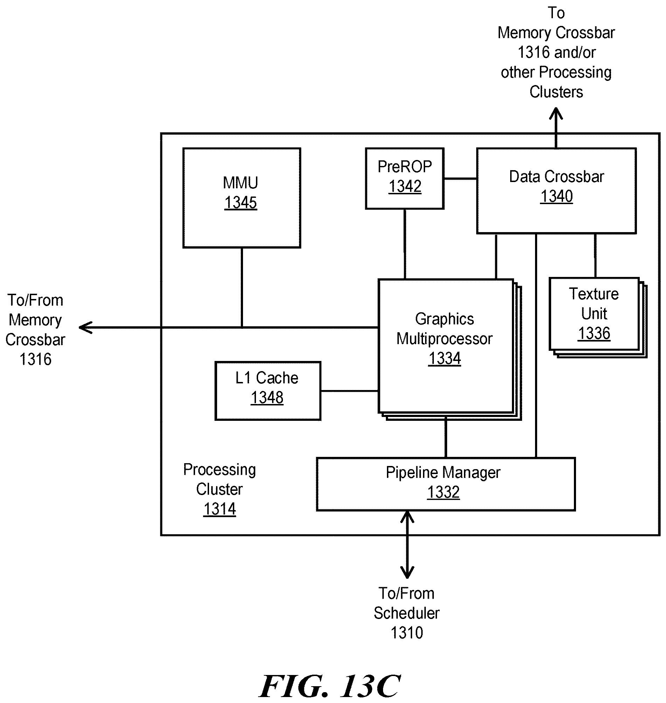

**FIG. 13C** is a block diagram of a processing cluster 1314 within a parallel processing unit. For example, the processing cluster is an instance of one of the processing clusters 1314A-1314N of FIG. 13A. The processing cluster 1314 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1314 can be controlled via a pipeline manager 1332 that distributes processing tasks to SIMT parallel processors. The pipeline manager 1332 receives instructions from the scheduler 1310 of FIG. 13A and manages execution of those instructions via a graphics multiprocessor 1334 and/or a texture unit 1336. The graphics multiprocessor 1334 is an exemplary instance of a SIMT parallel processor. However, various types of SIMT parallel processors of differing architectures may be included within the processing cluster 1314. One or more instances of the graphics multiprocessor 1334 can be included within a processing cluster 1314. The graphics multiprocessor 1334 can process data and a data crossbar 1340 can be used to distribute the processed data to one of multiple possible destinations, including other shader units. The pipeline manager 1332 can facilitate the distribution of processed data by specifying destinations for processed data to be distributed via the data crossbar 1340.

Each graphics multiprocessor 1334 within the processing cluster 1314 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1314 constitute a thread. A set of threads executing across the set of parallel processing engines is a thread group. A thread group executes the same program on different input data. Each thread within a thread group can be assigned to a different processing engine within a graphics multiprocessor 1334. A thread group may include fewer threads than the number of processing engines within the graphics multiprocessor 1334. When a thread group includes fewer threads than the number of processing engines, one or more of the processing engines may be idle during cycles in which that thread group is being processed. A thread group may also include more threads than the number of processing engines within the graphics multiprocessor 1334. When the thread group includes more threads than the number of processing engines within the graphics multiprocessor 1334, processing can be performed over consecutive clock cycles. Optionally, multiple thread groups can be executed concurrently on the graphics multiprocessor 1334.

The graphics multiprocessor 1334 may include an internal cache memory to perform load and store operations. Optionally, the graphics multiprocessor 1334 can forego an internal cache and use a cache memory (e.g., level 1 (L1) cache 1348) within the processing cluster 1314. Each graphics multiprocessor 1334 also has access to level 2 (L2) caches within the partition units (e.g., partition units 1320A-1320N of FIG. 13A) that are shared among all processing clusters 1314 and may be used to transfer data between threads. The graphics multiprocessor 1334 may also access off-chip global memory, which can include one or more of local parallel processor memory and/or system memory. Any memory external to the parallel processing unit 1302 may be used as global memory. Embodiments in which the processing cluster 1314 includes multiple instances of the graphics multiprocessor 1334 can share common instructions and data, which may be stored in the L1 cache 1348.

Each processing cluster 1314 may include an MMU 1345 (memory management unit) that is configured to map virtual addresses into physical addresses. In other examples, one or more instances of the MMU 1345 may reside within the memory interface 1318 of FIG. 13A. The MMU 1345 includes a set of page table entries (PTEs) used to map a virtual address to a physical address of a tile and optionally a cache line index. The MMU 1345 may include address translation lookaside buffers (TLB) or caches that may reside within the graphics multiprocessor 1334 or the L1 cache 1348 of processing cluster 1314. The physical address is processed to distribute surface data access locality to allow efficient request interleaving among partition units. The cache line index may be used to determine whether a request for a cache line is a hit or miss.

In graphics and computing applications, a processing cluster 1314 may be configured such that each graphics multiprocessor 1334 is coupled to a texture unit 1336 for performing texture mapping operations, e.g., determining texture sample positions, reading texture data, and filtering the texture data. Texture data is read from an internal texture L1 cache (not shown) or in some examples from the L1 cache within graphics multiprocessor 1334 and is fetched from an L2 cache, local parallel processor memory, or system memory, as needed. Each graphics multiprocessor 1334 outputs processed tasks to the data crossbar 1340 to provide the processed task to another processing cluster 1314 for further processing or to store the processed task in an L2 cache, local parallel processor memory, or system memory via the memory crossbar 1316. A preROP 1342 (pre-raster operations unit) is configured to receive data from graphics multiprocessor 1334, direct data to ROP units, which may be located with partition units as described herein (e.g., partition units 1320A-1320N of FIG. 13A). The preROP 1342 unit can perform optimizations for color blending, organize pixel color data, and perform address translations.

It will be appreciated that the core architecture described herein is illustrative and that variations and modifications are possible. Any number of processing units, e.g., graphics multiprocessor 1334, texture units 1336, preROPs 1342, etc., may be included within a processing cluster 1314. Further, while only one processing cluster 1314 is shown, a parallel processing unit as described herein may include any number of instances of the processing cluster 1314. Optionally, each processing cluster 1314 can be configured to operate independently of other processing clusters 1314 using separate and distinct processing units, L1 caches, L2 caches, etc.

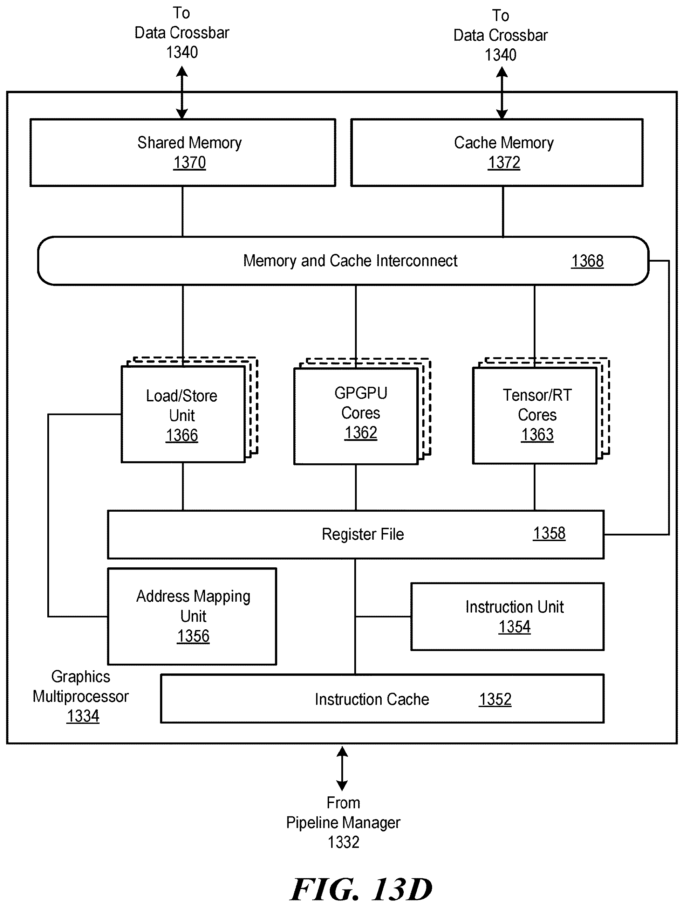

FIG. 13D shows an example of the graphics multiprocessor 1334 in which the graphics multiprocessor 1334 couples with the pipeline manager 1332 of the processing cluster 1314. The graphics multiprocessor 1334 has an execution pipeline including but not limited to an instruction cache 1352, an instruction unit 1354, an address mapping unit 1356, a register file 1358, one or more general purpose graphics processing unit (GPGPU) cores 1362, and one or more load/store units 1366. The GPGPU cores 1362 and load/store units 1366 are coupled with cache memory 1372 and shared memory 1370 via a memory and cache interconnect 1368. The graphics multiprocessor 1334 may additionally include tensor and/or ray-tracing cores 1363 that include hardware logic to accelerate matrix and/or ray-tracing operations.

The instruction cache 1352 may receive a stream of instructions to execute from the pipeline manager 1332. The instructions are cached in the instruction cache 1352 and dispatched for execution by the instruction unit 1354. The instruction unit 1354 can dispatch instructions as thread groups (e.g., warps), with each thread of the thread group assigned to a different execution unit within GPGPU core 1362. An instruction can access any of a local, shared, or global address space by specifying an address within a unified address space. The address mapping unit 1356 can be used to translate addresses in the unified address space into a distinct memory address that can be accessed by the load/store units 1366.

The register file 1358 provides a set of registers for the functional units of the graphics multiprocessor 1334. The register file 1358 provides temporary storage for operands connected to the data paths of the functional units (e.g., GPGPU cores 1362, load/store units 1366) of the graphics multiprocessor 1334. The register file 1358 may be divided between each of the functional units such that each functional unit is allocated a dedicated portion of the register file 1358. For example, the register file 1358 may be divided between the different warps being executed by the graphics multiprocessor 1334.

The GPGPU cores 1362 can each include floating point units (FPUs) and/or integer arithmetic logic units (ALUs) that are used to execute instructions of the graphics multiprocessor 1334. In some implementations, the GPGPU cores 1362 can include hardware logic that may otherwise reside within the tensor and/or ray-tracing cores 1363. The GPGPU cores 1362 can be similar in architecture or can differ in architecture. For example and in some examples, a first portion of the GPGPU cores 1362 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1334 can additionally include one or more fixed function or special function units to perform specific functions such as copy rectangle or pixel blending operations. One or more of the GPGPU cores can also include fixed or special function logic.

The GPGPU cores 1362 may include SIMD logic capable of performing a single instruction on multiple sets of data. Optionally, GPGPU cores 1362 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1368 is an interconnect network that connects each of the functional units of the graphics multiprocessor 1334 to the register file 1358 and to the shared memory 1370. For example, the memory and cache interconnect 1368 is a crossbar interconnect that allows the load/store unit 1366 to implement load and store operations between the shared memory 1370 and the register file 1358. The register file 1358 can operate at the same frequency as the GPGPU cores 1362, thus data transfer between the GPGPU cores 1362 and the register file 1358 is very low latency. The shared memory 1370 can be used to enable communication between threads that execute on the functional units within the graphics multiprocessor 1334. The cache memory 1372 can be used as a data cache for example, to cache texture data communicated between the functional units and the texture unit 1336. The shared memory 1370 can also be used as a program managed cached. The shared memory 1370 and the cache memory 1372 can couple with the data crossbar 1340 to enable communication with other components of the processing cluster. Threads executing on the GPGPU cores 1362 can programmatically store data within the shared memory in addition to the automatically cached data that is stored within the cache memory 1372.

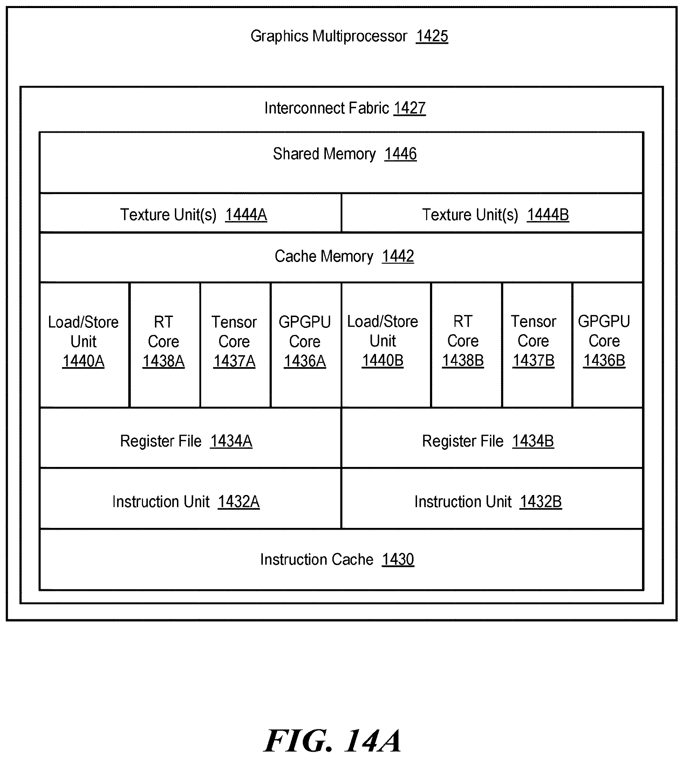

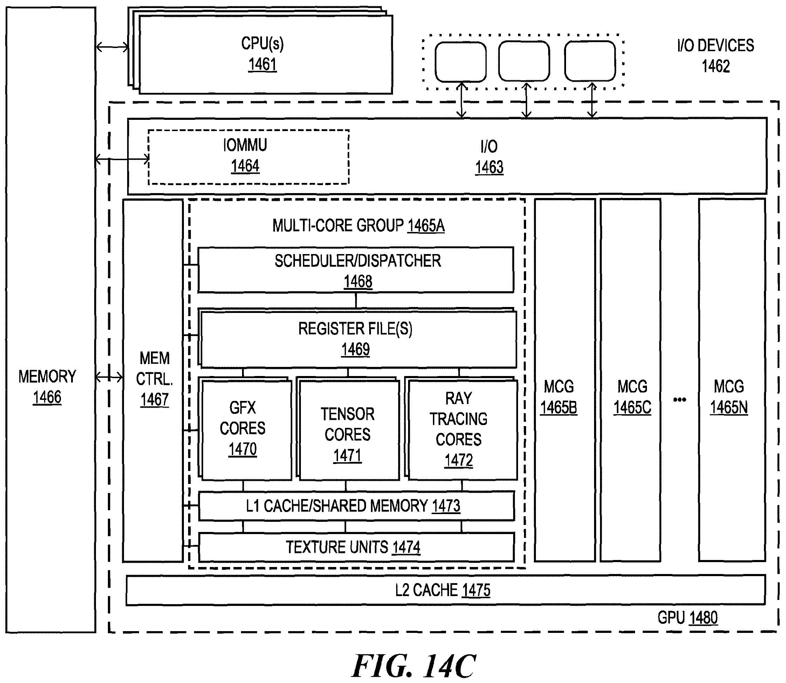

**FIGS. 14A-14C** illustrate additional graphics multiprocessors, according to examples. FIG. 14A-14B illustrate graphics multiprocessors 1425, 1450, which are related to the graphics multiprocessor 1334 of FIG. 13C and may be used in place of one of those. Therefore, the disclosure of any features in combination with the graphics multiprocessor 1334 herein also discloses a corresponding combination with the graphics multiprocessors 1425, 1450, but is not limited to such. FIG. 14C illustrates a graphics processing unit (GPU) 1480 which includes dedicated sets of graphics processing resources arranged into multi-core groups 1465A-1465N, which correspond to the graphics multiprocessors 1425, 1450. The illustrated graphics multiprocessors 1425, 1450 and the multi-core groups 1465A-1465N can be streaming multiprocessors (SM) capable of simultaneous execution of a large number of execution threads.

The graphics multiprocessor 1425 of FIG. 14A includes multiple additional instances of execution resource units relative to the graphics multiprocessor 1334 of FIG. 13D. For example, the graphics multiprocessor 1425 can include multiple instances of the instruction unit 1432A-1432B, register file 1434A-1434B, and texture unit(s) 1444A-1444B. The graphics multiprocessor 1425 also includes multiple sets of graphics or compute execution units (e.g., GPGPU core 1436A-1436B, tensor core 1437A-1437B, ray-tracing core 1438A-1438B) and multiple sets of load/store units 1440A-1440B. The execution resource units have a common instruction cache 1430, texture and/or data cache memory 1442, and shared memory 1446.

The various components can communicate via an interconnect fabric 1427. The interconnect fabric 1427 may include one or more crossbar switches to enable communication between the various components of the graphics multiprocessor 1425. The interconnect fabric 1427 may be a separate, high-speed network fabric layer upon which each component of the graphics multiprocessor 1425 is stacked. The components of the graphics multiprocessor 1425 communicate with remote components via the interconnect fabric 1427. For example, the cores 1436A-1436B, 1437A-1437B, and 1438A-1438B can each communicate with shared memory 1446 via the interconnect fabric 1427. The interconnect fabric 1427 can arbitrate communication within the graphics multiprocessor 1425 to ensure a fair bandwidth allocation between components.

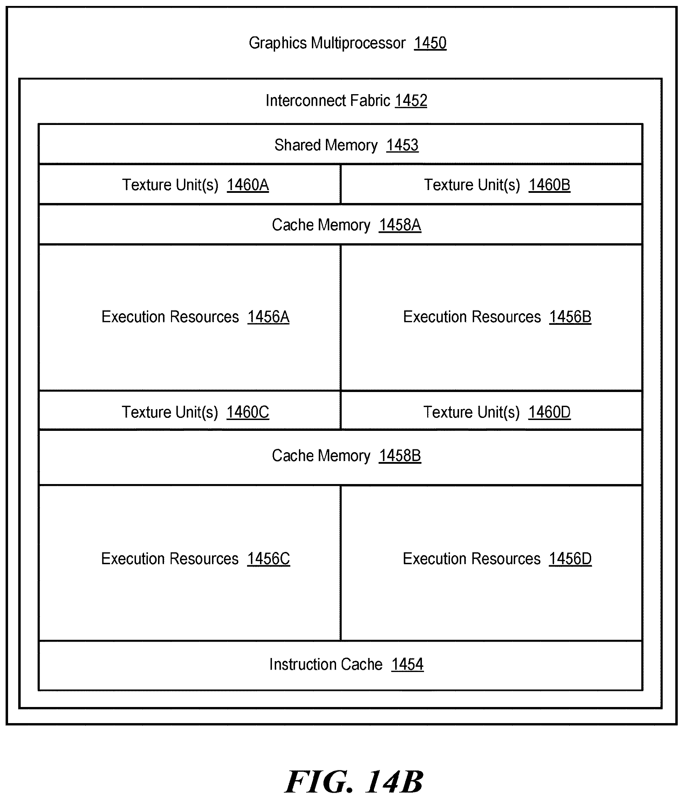

The graphics multiprocessor 1450 of FIG. 14B includes multiple sets of execution resources 1456A-1456D, where each set of execution resource includes multiple instruction units, register files, GPGPU cores, and load store units, as illustrated in FIG. 13D and FIG. 14A. The execution resources 1456A-1456D can work in concert with texture unit(s) 1460A-1460D for texture operations, while sharing an instruction cache 1454, and shared memory 1453. For example, the execution resources 1456A-1456D can share an instruction cache 1454 and shared memory 1453, as well as multiple instances of a texture and/or data cache memory 1458A-1458B. The various components can communicate via an interconnect fabric 1452 similar to the interconnect fabric 1427 of FIG. 14A.

Persons skilled in the art will understand that the architecture described in FIG. 1, 13A-13D, and 14A-14B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1302 of FIG. 13A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 14C illustrates a graphics processing unit (GPU) 1480 which includes dedicated sets of graphics processing resources arranged into multi-core groups 1465A-1465N. While the details of only a single multi-core group 1465A are provided, it will be appreciated that the other multi-core groups 1465B-1465N may be equipped with the same or similar sets of graphics processing resources. Details described with respect to the multi-core groups 1465A-1465N may also apply to any graphics multiprocessor 1334, 1425, 1450 described herein.

As illustrated, a multi-core group 1465A may include a set of graphics cores 1470, a set of tensor cores 1471, and a set of ray tracing cores 1472. A scheduler/dispatcher 1468 schedules and dispatches the graphics threads for execution on the various cores 1470, 1471, 1472. A set of register files 1469 store operand values used by the cores 1470, 1471, 1472 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1473 store graphics data such as texture data, vertex data, pixel data, ray data, bounding volume data, etc., locally within each multi-core group 1465A. One or more texture units 1474 can also be used to perform texturing operations, such as texture mapping and sampling. A Level 2 (L2) cache 1475 shared by all or a subset of the multi-core groups 1465A-1465N stores graphics data and/or instructions for multiple concurrent graphics threads. As illustrated, the L2 cache 1475 may be shared across a plurality of multi-core groups 1465A-1465N. One or more memory controllers 1467 couple the GPU 1480 to a memory 1466 which may be a system memory (e.g., DRAM) and/or a dedicated graphics memory (e.g., GDDR6 memory).

Input/output (I/O) circuitry 1463 couples the GPU 1480 to one or more I/O devices 1462 such as digital signal processors (DSPs), network controllers, or user input devices. An on-chip interconnect may be used to couple the I/O devices 1462 to the GPU 1480 and memory 1466. One or more I/O memory management units (IOMMUs) 1464 of the I/O circuitry 1463 couple the I/O devices 1462 directly to the system memory 1466. Optionally, the IOMMU 1464 manages multiple sets of page tables to map virtual addresses to physical addresses in system memory 1466. The I/O devices 1462, CPU(s) 1461, and GPU(s) 1480 may then share the same virtual address space.

In one implementation of the IOMMU 1464, the IOMMU 1464 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1466). The base addresses of each of the first and second sets of page tables may be stored in control registers and swapped out on a context switch (e.g., so that the new context is provided with access to the relevant set of page tables). While not illustrated in FIG. 14C, each of the cores 1470, 1471, 1472 and/or multi-core groups 1465A-1465N may include translation lookaside buffers (TLBs) to cache guest virtual to guest physical translations, guest physical to host physical translations, and guest virtual to host physical translations.

The CPU(s) 1461, GPUs 1480, and I/O devices 1462 may be integrated on a single semiconductor chip and/or chip package. The illustrated memory 1466 may be integrated on the same chip or may be coupled to the memory controllers 1467 via an off-chip interface. In one implementation, the memory 1466 comprises GDDR6 memory which shares the same virtual address space as other physical system-level memories, although the underlying principles described herein are not limited to this specific implementation.

The tensor cores 1471 may include a plurality of execution units specifically designed to perform matrix operations, which are the fundamental compute operation used to perform deep learning operations. For example, simultaneous matrix multiplication operations may be used for neural network training and inferencing. The tensor cores 1471 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1471. The training of neural networks, in particular, requires a significant number of matrix dot product operations. In order to process an inner-product formulation of an N x N x N matrix multiply, the tensor cores 1471 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1471 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1471 support a sparse mode of operation for matrices in which the vast majority of values are zero. The tensor cores 1471 include support for sparse input matrices that are encoded in a sparse matrix representation (e.g., coordinate list encoding (COO), compressed sparse row (CSR), compress sparse column (CSC), etc.). The tensor cores 1471 also include support for compressed sparse matrix representations in the event that the sparse matrix representation may be further compressed. Compressed, encoded, and/or compressed and encoded matrix data, along with associated compression and/or encoding metadata, can be read by the tensor cores 1471 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1471, output matrix C may be output in a compressed format, a sparse encoding, or a compressed sparse encoding.

The ray tracing cores 1472 may accelerate ray tracing operations for both real-time ray tracing and non-real-time ray tracing implementations. In particular, the ray tracing cores 1472 may include ray traversal/intersection circuitry for performing ray traversal using bounding volume hierarchies (BVHs) and identifying intersections between rays and primitives enclosed within the BVH volumes. The ray tracing cores 1472 may also include circuitry for performing depth testing and culling (e.g., using a Z buffer or similar arrangement). In one implementation, the ray tracing cores 1472 perform traversal and intersection operations in concert with the image denoising techniques described herein, at least a portion of which may be executed on the tensor cores 1471. For example, the tensor cores 1471 may implement a deep learning neural network to perform denoising of frames generated by the ray tracing cores 1472. However, the CPU(s) 1461, graphics cores 1470, and/or ray tracing cores 1472 may also implement all or a portion of the denoising and/or deep learning algorithms.

In addition, as described above, a distributed approach to denoising may be employed in which the GPU 1480 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1472 may process all BVH traversal and/or ray-primitive intersections, saving the graphics cores 1470 from being overloaded with thousands of instructions per ray. For example, each ray tracing core 1472 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1465A can simply launch a ray probe, and the ray tracing cores 1472 independently perform ray traversal and intersection and return hit data (e.g., a hit, no hit, multiple hits, etc.) to the thread context. The other cores 1470, 1471 are freed to perform other graphics or compute work while the ray tracing cores 1472 perform the traversal and intersection operations.

Optionally, each ray tracing core 1472 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1470 and tensor cores 1471) are freed to perform other forms of graphics work.

In some examples described below, a hybrid rasterization/ray tracing approach is used in which work is distributed between the graphics cores 1470 and ray tracing cores 1472.

The ray tracing cores 1472 (and/or other cores 1470, 1471) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1472, graphics cores 1470 and tensor cores 1471 is Vulkan API (e.g., Vulkan version 1.1.85 and later). Note, however, that the underlying principles described herein are not limited to any particular ray tracing ISA.

In general, the various cores 1472, 1471, 1470 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 1472 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1472 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1472 can also be used to perform computations that are not directly analogous to ray tracing. For example, mesh projection, mesh refinement, and volume sampling computations can be accelerated using the ray tracing cores 1472. Generic coordinate space calculations, such as nearest neighbor calculations can also be performed. For example, the set of points near a given point can be discovered by defining a bounding box in the coordinate space around the point. BVH and ray probe logic within the ray tracing cores 1472 can then be used to determine the set of point intersections within the bounding box. The intersections constitute the origin point and the nearest neighbors to that origin point. Computations that are performed using the ray tracing cores 1472 can be performed in parallel with computations performed on the graphics cores 1472 and tensor cores 1471. A shader compiler can be configured to compile a compute shader or other general-purpose graphics processing program into low level primitives that can be parallelized across the graphics cores 1470, tensor cores 1471, and ray tracing cores 1472.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

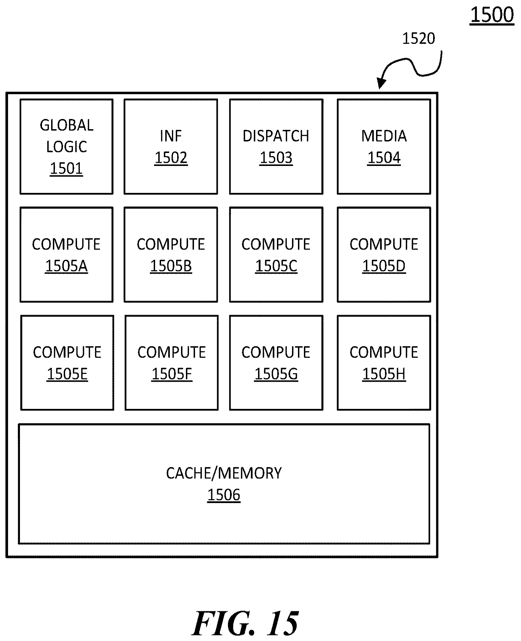

**FIG. 15** shows a parallel compute system 1500, according to some examples. In some examples the parallel compute system 1500 includes a parallel processor 1520, which can be a graphics processor or compute accelerator as described herein. The parallel processor 1520 includes a global logic unit 1501, an interface 1502, a thread dispatcher 1503, a media unit 1504, a set of compute units 1505A-1505H, and a cache/memory units 1506. The global logic unit 1501, in some examples, includes global functionality for the parallel processor 1520, including device configuration registers, global schedulers, power management logic, and the like. The interface 1502 can include a front-end interface for the parallel processor 1520. The thread dispatcher 1503 can receive workloads from the interface 1502 and dispatch threads for the workload to the compute units 1505A-1505H. If the workload includes any media operations, at least a portion of those operations can be performed by the media unit 1504. The media unit can also offload some operations to the compute units 1505A-1505H. The cache/memory units 1506 can include cache memory (e.g., L3 cache) and local memory (e.g., HBM, GDDR) for the parallel processor 1520. Compute units 1505 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

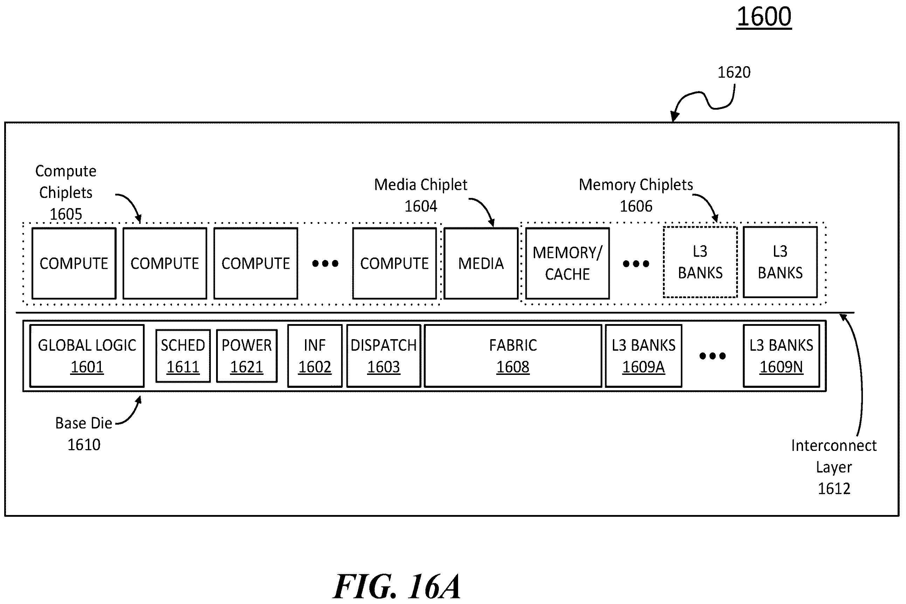

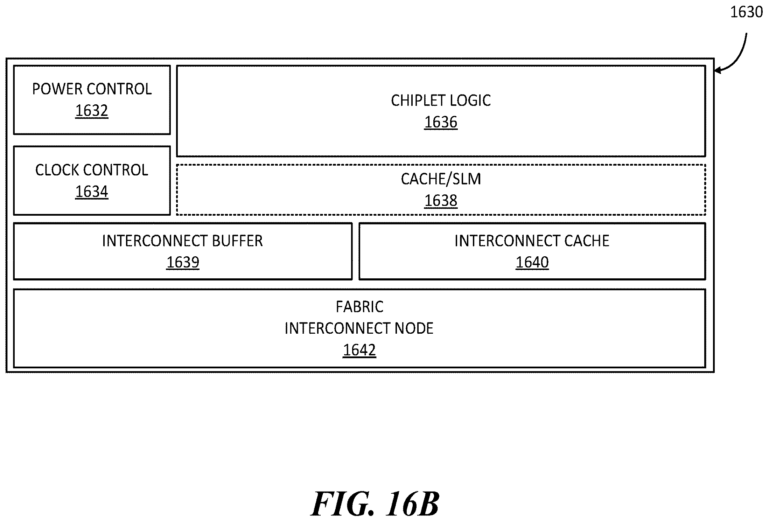

**FIGS. 16A-B** illustrate a hybrid logical/physical view of a disaggregated parallel processor, according to examples described herein. FIG. 16A illustrates a disaggregated parallel compute system 1600. FIG. 16B illustrates a chiplet 1630 of the disaggregated parallel compute system 1600.

As shown in FIG. 16A, a disaggregated parallel compute system 1600 can include a parallel processor 1620 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1605, a media chiplet 1604, and memory chiplets 1606. Each chiplet can be separately manufactured using different process technologies. For example, compute chiplets 1605 may be manufactured using the smallest or most advanced process technology available at the time of fabrication, while memory chiplets 1606 or other chiplets (e.g., I/O, networking, etc.) may be manufactured using a larger or less advanced process technologies.

The various chiplets can be bonded to a base die 1610 and configured to communicate with each other and logic within the base die 1610 via an interconnect layer 1612. In some examples, the base die 1610 can include global logic 1601, which can include scheduler 1611 and power management 1621 logic units, an interface 1602, a dispatch unit 1603, and an interconnect fabric 1608 coupled with or integrated with one or more L3 cache banks 1609A-1609N. The interconnect fabric 1608 can be an inter-chiplet fabric that is integrated into the base die 1610. Logic chiplets can use the fabric 1608 to relay messages between the various chiplets. Additionally, L3 cache banks 1609A-1609N in the base die and/or L3 cache banks within the memory chiplets 1606 can cache data read from and transmitted to DRAM chiplets within the memory chiplets 1606 and to system memory of a host.

In some examples the global logic 1601 is a microcontroller that can execute firmware to perform scheduler 1611 and power management 1621 functionality for the parallel processor 1620. The microcontroller that executes the global logic can be tailored for the target use case of the parallel processor 1620. The scheduler 1611 can perform global scheduling operations for the parallel processor 1620. The power management 1621 functionality can be used to enable or disable individual chiplets within the parallel processor when those chiplets are not in use.

The various chiplets of the parallel processor 1620 can be designed to perform specific functionality that, in existing designs, would be integrated into a single die. A set of compute chiplets 1605 can include clusters of compute units (e.g., execution units, streaming multiprocessors, etc.) that include programmable logic to execute compute or graphics shader instructions. A media chiplet 1604 can include hardware logic to accelerate media encode and decode operations. Memory chiplets 1606 can include volatile memory (e.g., DRAM) and one or more SRAM cache memory banks (e.g., L3 banks).

As shown in FIG. 16B, each chiplet 1630 can include common components and application specific components. Chiplet logic 1636 within the chiplet 1630 can include the specific components of the chiplet, such as an array of streaming multiprocessors, compute units, or execution units described herein. The chiplet logic 1636 can couple with an optional cache or shared local memory 1638 or can include a cache or shared local memory within the chiplet logic 1636. The chiplet 1630 can include a fabric interconnect node 1642 that receives commands via the inter-chiplet fabric. Commands and data received via the fabric interconnect node 1642 can be stored temporarily within an interconnect buffer 1639. Data transmitted to and received from the fabric interconnect node 1642 can be stored in an interconnect cache 1640. Power control 1632 and clock control 1634 logic can also be included within the chiplet. The power control 1632 and clock control 1634 logic can receive configuration commands via the fabric can configure dynamic voltage and frequency scaling for the chiplet 1630. In some examples, each chiplet can have an independent clock domain and power domain and can be clock gated and power gated independently of other chiplets.

At least a portion of the components within the illustrated chiplet 1630 can also be included within logic embedded within the base die 1610 of FIG. 16A. For example, logic within the base die that communicates with the fabric can include a version of the fabric interconnect node 1642. Base die logic that can be independently clock or power gated can include a version of the power control 1632 and/or clock control 1634 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Example Core Architectures - In-order and out-of-order core block diagram.

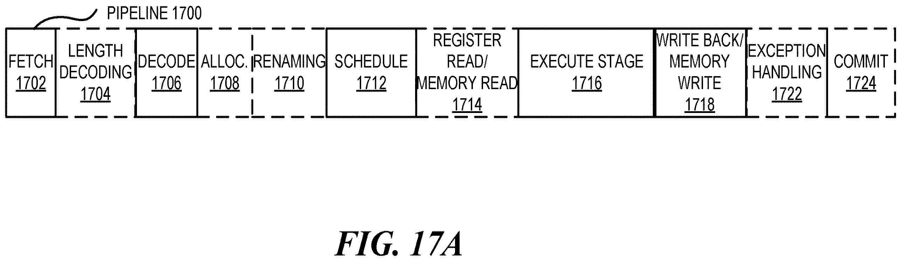

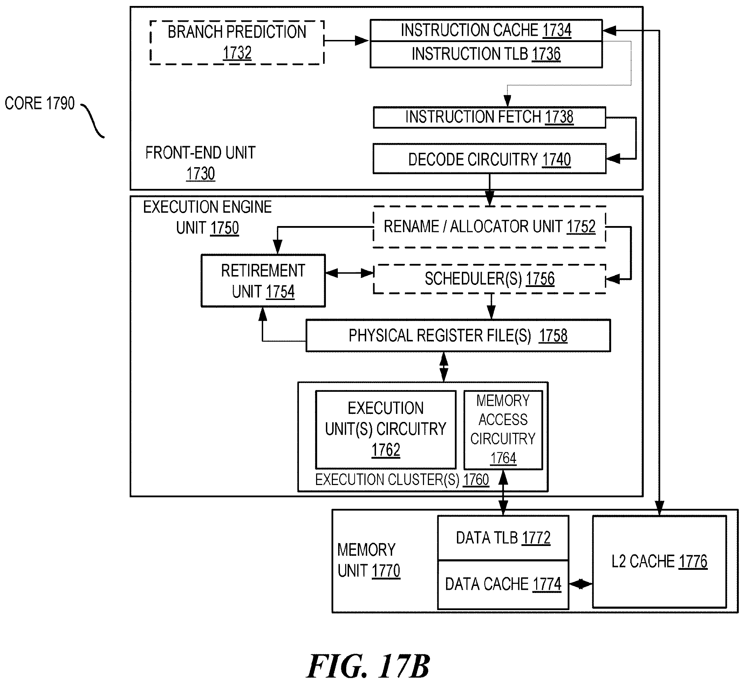

**FIG. 17A** is a block diagram illustrating both an example in-order pipeline and an example register renaming, out-of-order issue/execution pipeline according to examples. FIG. 17B is a block diagram illustrating both an example in-order architecture core and an example register renaming, out-of-order issue/execution architecture core to be included in a processor according to examples. The solid lined boxes in FIGS. 17A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 17A, a processor pipeline 1700 includes a fetch stage 1702, an optional length decoding stage 1704, a decode stage 1706, an optional allocation (Alloc) stage 1708, an optional renaming stage 1710, a schedule (also known as a dispatch or issue) stage 1712, an optional register read/memory read stage 1714, an execute stage 1716, a write back/memory write stage 1718, an optional exception handling stage 1722, and an optional commit stage 1724. One or more operations can be performed in each of these processor pipeline stages. For example, during the fetch stage 1702, one or more instructions are fetched from instruction memory, and during the decode stage 1706, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1706 and the register read/memory read stage 1714 may be combined into one pipeline stage. In some examples, during the execute stage 1716, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 17B may implement the pipeline 1700 as follows: 1) the instruction fetch circuitry 1738 performs the fetch and length decoding stages 1702 and 1704; 2) the decode circuitry 1740 performs the decode stage 1706; 3) the rename/allocator unit circuitry 1752 performs the allocation stage 1708 and renaming stage 1710; 4) the scheduler(s) circuitry 1756 performs the schedule stage 1712; 5) the physical register file(s) circuitry 1758 and the memory unit circuitry 1770 perform the register read/memory read stage 1714; the execution cluster(s) 1760 perform the execute stage 1716; 6) the memory unit circuitry 1770 and the physical register file(s) circuitry 1758 perform the write back/memory write stage 1718; 7) various circuitry may be involved in the exception handling stage 1722; and 8) the retirement unit circuitry 1754 and the physical register file(s) circuitry 1758 perform the commit stage 1724.

FIG. **17B** shows a processor core 1790 including front-end unit circuitry 1730 coupled to execution engine unit circuitry 1750, and both are coupled to memory unit circuitry 1770. The core 1790 may be a reduced instruction set architecture computing (RISC) core, a complex instruction set architecture computing (CISC) core, a very long instruction word (VLIW) core, or a hybrid or alternative core type. As yet another option, the core 1790 may be a special-purpose core, such as, for example, a network or communication core, compression engine, co-processor core, general purpose computing graphics processing unit (GPGPU) core, graphics core, or the like.

The front-end unit circuitry 1730 may include branch prediction circuitry 1732 coupled to instruction cache circuitry 1734, which is coupled to an instruction translation lookaside buffer (TLB) 1736, which is coupled to instruction fetch circuitry 1738, which is coupled to decode circuitry 1740. In some examples, the instruction cache circuitry 1734 is included in the memory unit circuitry 1770 rather than the front-end unit circuitry 1730. The decode circuitry 1740 (or decoder) may decode instructions, and generate as an output one or more micro-operations, microcode entry points, microinstructions, other instructions, or other control signals, which are decoded from, or which otherwise reflect, or are derived from, the original instructions. The decode circuitry 1740 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1740 may be implemented using various different mechanisms. Examples of suitable mechanisms include, but are not limited to, look-up tables, hardware implementations, programmable logic arrays (PLAs), microcode read only memories (ROMs), etc. In some examples, the core 1790 includes a microcode ROM (not shown) or other medium that stores microcode for certain macroinstructions (e.g., in decode circuitry 1740 or otherwise within the front-end unit circuitry 1730). In some examples, the decode circuitry 1740 includes a micro-operation (micro-op) or operation cache (not shown) to hold/cache decoded operations, micro-tags, or micro-operations generated during the decode or other stages of the processor pipeline 1700. The decode circuitry 1740 may be coupled to rename/allocator unit circuitry 1752 in the execution engine unit circuitry 1750.

The execution engine unit circuitry 1750 includes the rename/allocator unit circuitry 1752 coupled to retirement unit circuitry 1754 and a set of one or more scheduler(s) circuitry 1756. The scheduler(s) circuitry 1756 represents any number of different schedulers, including reservations stations, central instruction window, etc. In some examples, the scheduler(s) circuitry 1756 can include arithmetic logic unit (ALU) scheduler/scheduling circuitry, ALU queues, address generation unit (AGU) scheduler/scheduling circuitry, AGU queues, etc. The scheduler(s) circuitry 1756 is coupled to the physical register file(s) circuitry 1758. Each of the physical register file(s) circuitry 1758 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 1758 includes vector registers unit circuitry, writemask registers unit circuitry, and scalar register unit circuitry. These register units may provide architectural vector registers, vector mask registers, general-purpose registers, etc. The physical register file(s) circuitry 1758 is coupled to the retirement unit circuitry 1754 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1754 and the physical register file(s) circuitry 1758 are coupled to the execution cluster(s) 1760. The execution cluster(s) 1760 includes a set of one or more execution unit(s) circuitry 1762 and a set of one or more memory access circuitry 1764. The execution unit(s) circuitry 1762 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). In some examples, execution unit(s) circuitry 1762 may include hardware to support functionality for instructions for one or more of a compression engine, graphics processing, neural-network processing, in-memory analytics, matrix operations, cryptographic operations, data streaming operations, data graph operations, etc.

While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1756, physical register file(s) circuitry 1758, and execution cluster(s) 1760 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1764). It should also be understood that where separate pipelines are used, one or more of these pipelines may be out-of-order issue/execution and the rest in-order.

In some examples, the execution engine unit circuitry 1750 may perform load store unit (LSU) address/data pipelining to an Advanced Microcontroller Bus (AMB) interface (not shown), and address phase and writeback, data phase load, store, and branches.

The set of memory access circuitry 1764 is coupled to the memory unit circuitry 1770, which includes data TLB circuitry 1772 coupled to data cache circuitry 1774 coupled to level 2 (L2) cache circuitry 1776. In some examples, the memory access circuitry 1764 may include load unit circuitry, store address unit circuitry, and store data unit circuitry, each of which is coupled to the data TLB circuitry 1772 in the memory unit circuitry 1770. The instruction cache circuitry 1734 is further coupled to the level 2 (L2) cache circuitry 1776 in the memory unit circuitry 1770. In some examples, the instruction cache 1734 and the data cache 1774 are combined into a single instruction and data cache (not shown) in L2 cache circuitry 1776, level 3 (L3) cache circuitry (not shown), and/or main memory. The L2 cache circuitry 1776 is coupled to one or more other levels of cache and eventually to a main memory.

The core 1790 may support one or more instructions sets (e.g., the x86 instruction set architecture (optionally with some extensions that have been added with newer versions); the MIPS instruction set architecture; the ARM instruction set architecture (optionally with optional additional extensions such as NEON, etc.); RISC instruction set architecture), including the instruction(s) described herein. In some examples, the core 1790 includes logic to support a packed data instruction set architecture extension (e.g., AVX1, AVX2, AVX512, AMX, etc.), thereby allowing the operations used by many multimedia applications to be performed using packed data.

### Example Execution Unit(s) Circuitry.

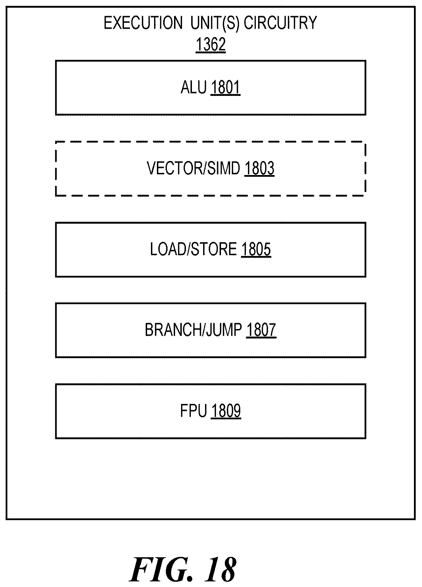

**FIG. 18** illustrates examples of execution unit(s) circuitry, such as execution unit(s) circuitry 1762 of FIG. 17). As illustrated, execution unit(s) circuitry 1762 may include one or more ALU circuits 1801, optional vector/single instruction multiple data (SIMD) circuits 1803, load/store circuits 1805, branch/jump circuits 1807, and/or Floating-point unit (FPU) circuits 1809. ALU circuits 1801 perform integer arithmetic and/or Boolean operations. Vector/SIMD circuits 1803 perform vector/SIMD operations on packed data (such as SIMD/vector registers). Load/store circuits 1805 execute load and store instructions to load data from memory into registers or store from registers to memory. Load/store circuits 1805 may also generate addresses. Branch/jump circuits 1807 cause a branch or jump to a memory address depending on the instruction. FPU circuits 1809 perform floating-point arithmetic. The width of the execution unit(s) circuitry 1762 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

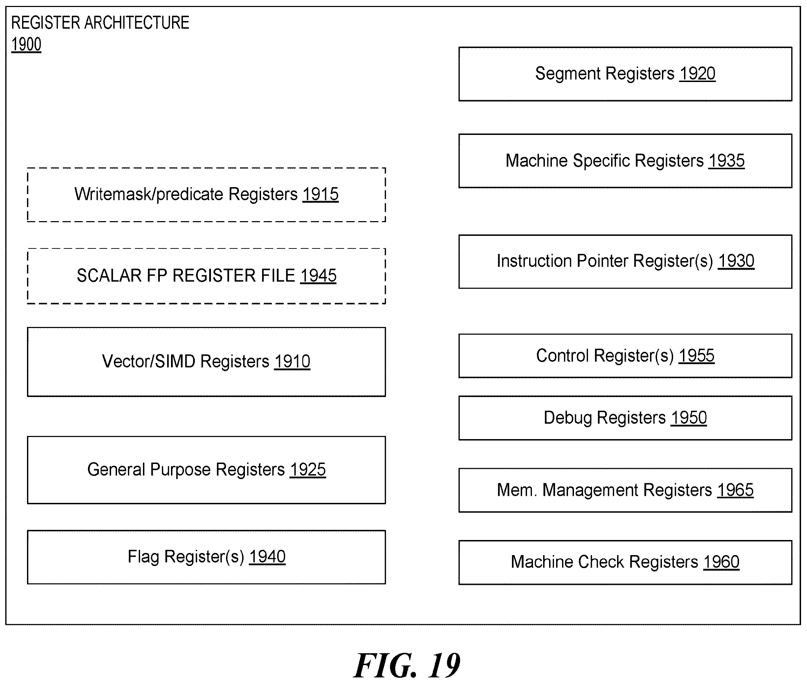

**FIG. 19** is a block diagram of a register architecture 1900 according to some examples. As illustrated, the register architecture 1900 includes vector/SIMD registers 1910 that vary from 128-bit to 1,024 bits width. In some examples, the vector/SIMD registers 1910 are physically 512-bits and, depending upon the mapping, only some of the lower bits are used. For example, in some examples, the vector/SIMD registers 1910 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1900 includes writemask/predicate registers 1915. For example, in some examples, there are 8 writemask/predicate registers (sometimes called k0 through k7) that are each 16-bit, 32-bit, 64-bit, or 128-bit in size. Writemask/predicate registers 1915 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1915 corresponds to a data element position of the destination. In other examples, the writemask/predicate registers 1915 are scalable and consists of a set number of enable bits for a given vector element (e.g., 8 enable bits per 64-bit vector element).

The register architecture 1900 includes a plurality of general-purpose registers 1925. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1900 includes scalar floating-point (FP) register file 1945 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1940 (e.g., EFLAGS, RFLAGS, etc.) store status and control information for arithmetic, compare, and system operations. For example, the one or more flag registers 1940 may store condition code information such as carry, parity, auxiliary carry, zero, sign, and overflow. In some examples, the one or more flag registers 1940 are called program status and control registers.

Segment registers 1920 contain segment points for use in accessing memory. In some examples, these registers are referenced by the names CS, DS, SS, ES, FS, and GS.

Model specific registers or machine specific registers (MSRs) 1935 control and report on processor performance. Most MSRs 1935 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1960 consist of control, status, and error reporting MSRs that are used to detect and report on hardware errors. Control register(s) 1955 (e.g., CR0-CR4) determine the operating mode of a processor (e.g., processor 1070, 1080, 1038, 1015, and/or 1100) and the characteristics of a currently executing task. In some examples, MSRs 1935 are a subset of control registers 1955.

One or more instruction pointer register(s) 1930 store an instruction pointer value. Debug registers 1950 control and allow for the monitoring of a processor or core's debugging operations.

Memory (mem) management registers 1965 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1900 may, for example, be used in register file / memory 'ISAB08, or physical register file(s) circuitry 1758.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

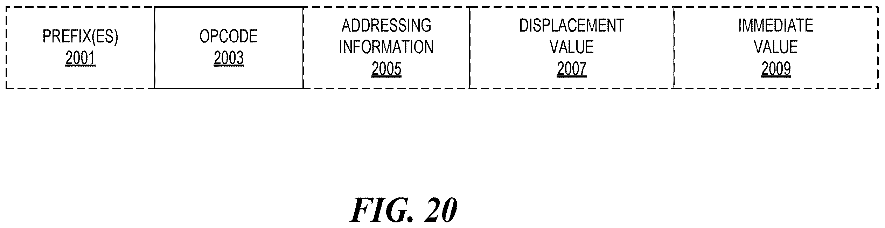

FIG. 20 illustrates examples of an instruction format. As illustrated, an instruction may include multiple components including, but not limited to, one or more fields for: one or more prefixes , an opcode , addressing information (e.g., register identifiers, memory addressing information, etc.), a displacement value , and/or an immediate value. Note that some instructions utilize some or all the fields of the format whereas others may only use the field for the opcode 2003. In some examples, the order illustrated is the order in which these fields are to be encoded, however, it should be appreciated that in other examples these fields may be encoded in a different order, combined, etc.

The prefix(es) of 2001, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2003 is used to at least partially define the operation to be performed upon a decoding of the instruction. In some examples, a primary opcode encoded in the opcode field 2003 is one, two, or three bytes in length. In other examples, a primary opcode can be a different length. An additional 3-bit opcode field is sometimes encoded in another field.

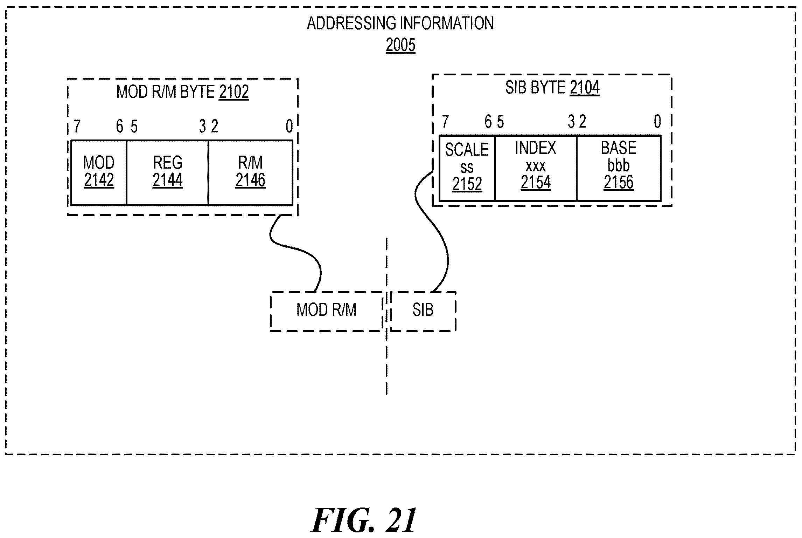

The addressing information field 2005 is used to address one or more operands of the instruction, such as a location in memory or one or more registers. FIG. 21 illustrates examples of the addressing information field 2005. In this illustration, an optional MOD R/M byte 2102 and an optional Scale, Index, Base (SIB) byte 2104 are shown. The MOD R/M byte 2102 and the SIB byte 2104 are used to encode up to two operands of an instruction, each of which is a direct register or effective memory address. Note that both of these fields are optional in that not all instructions include one or more of these fields. The MOD R/M byte 2102 includes a MOD field 2142, a register (reg) field 2144, and R/M field 2146.

The content of the MOD field 2142 distinguishes between memory access and non-memory access modes. In some examples, when the MOD field 2142 has a binary value of 11 (11b), a register-direct addressing mode is utilized, and otherwise a register-indirect addressing mode is used.

The register field 2144 may encode either the destination register operand or a source register operand or may encode an opcode extension and not be used to encode any instruction operand. The content of register field 2144, directly or through address generation, specifies the locations of a source or destination operand (either in a register or in memory). In some examples, the register field 2144 is supplemented with an additional bit from a prefix (e.g., prefix 2001) to allow for greater addressing.

The R/M field 2146 may be used to encode an instruction operand that references a memory address or may be used to encode either the destination register operand or a source register operand. Note the R/M field 2146 may be combined with the MOD field 2142 to dictate an addressing mode in some examples.

The SIB byte 2104 includes a scale field 2152, an index field 2154, and a base field 2156 to be used in the generation of an address. The scale field 2152 indicates a scaling factor. The index field 2154 specifies an index register to use. In some examples, the index field 2154 is supplemented with an additional bit from a prefix (e.g., prefix 2001) to allow for greater addressing. The base field 2156 specifies a base register to use. In some examples, the base field 2156 is supplemented with an additional bit from a prefix (e.g., prefix 2001) to allow for greater addressing. In practice, the content of the scale field 2152 allows for the scaling of the content of the index field 2154 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2007 provides this value. Additionally, in some examples, a displacement factor usage is encoded in the MOD field of the addressing information field 2005 that indicates a compressed displacement scheme for which a displacement value is calculated and stored in the displacement field 2007.

In some examples, the immediate value field 2009 specifies an immediate value for the instruction. An immediate value may be encoded as a 1-byte value, a 2-byte value, a 4-byte value, etc.

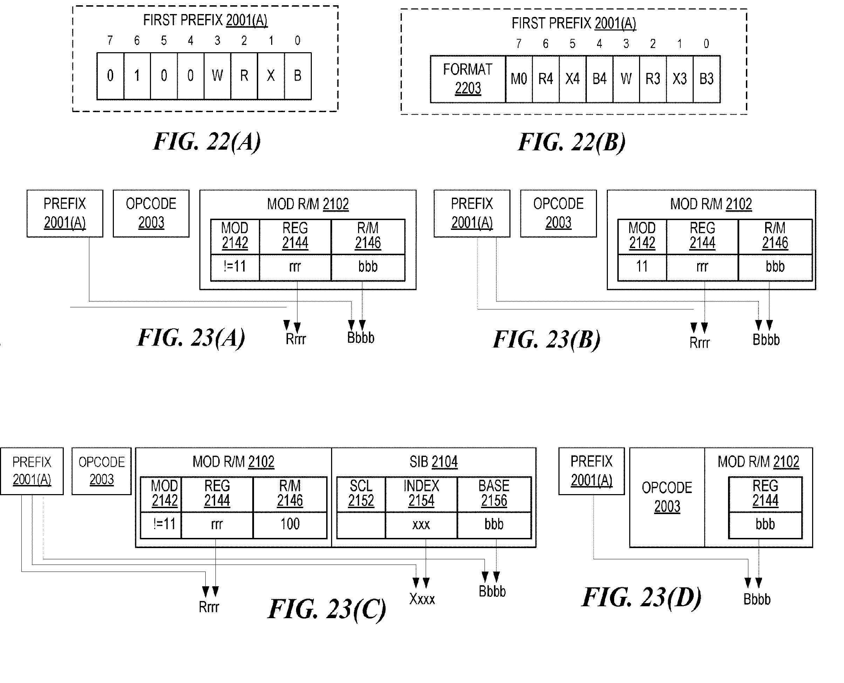

**FIGS. 22(A)****-(B)** illustrates examples of a first prefix 2001(A). FIG. 22(A) illustrates first examples of the first prefix 2001(A). In some examples, the first prefix 2001(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2001(A) may specify up to three registers using 3-bit fields depending on the format: 1) using the reg field 2144 and the R/M field 2146 of the MOD R/M byte 2102; 2) using the MOD R/M byte 2102 with the SIB byte 2104 including using the reg field 2144 and the base field 2156 and index field 2154; or 3) using the register field of an opcode.

In the first prefix 2001(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 2144 and MOD R/M R/M field 2146 alone can each only address 8 registers.

In the first prefix 2001(A), bit position 2 (R) may be an extension of the MOD R/M reg field 2144 and may be used to modify the MOD R/M reg field 2144 when that field encodes a general-purpose register, a 64-bit packed data register (e.g., a SSE register), or a control or debug register. R is ignored when MOD R/M byte 2102 specifies other registers or defines an extended opcode.

Bit position 1 (X) may modify the SIB byte index field 2154.

Bit position 0 (B) may modify the base in the MOD R/M R/M field 2146 or the SIB byte base field 2156; or it may modify the opcode register field used for accessing general purpose registers (e.g., general purpose registers 1925).

FIG. 22(B) illustrates second examples of the first prefix 2001(A). In some examples, the prefix 2001(A) supports addressing 32 general purpose registers. In some examples, this prefix is called REX2.

In some examples, one or more of instructions for increment, decrement, negation, addition, subtraction, AND, OR, XOR, shift arithmetically left, shift logically left, shift arithmetically right, shift logically right, rotate left, rotate right, multiply, divide, population count, leading zero count, total zero count, etc. support flag suppression.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, leading zero count, total zero count, unsinged integer addition of two operands with carry flag, unsinged integer addition of two operands with overflow flag, conditional move, pop, push, etc. support REX2.

As shown, REX2 has a format field 2203 in a first byte and 8 bits in a second byte (e.g., a payload byte). In some examples, the format field 2203 has a value of 0xD5. In some examples, 0xD5 encodes an ASCIII Adjust AX Before Division (AAD) instruction in a 32-bit mode. In those examples, in a 64-bit mode it is used as the first byte of the prefix of FIG. 22(B).

The payload byte includes several bits.

Bit position 0 (B3) may modify the base in the MOD R/M R/M field 2146 or the SIB byte base field 2156; or it may modify the opcode register field used for accessing general purpose registers (e.g., general purpose registers 1925).

Bit position 1 (X3) may modify the SIB byte index field 2154.

Bit position 2 (R3) may be used as an extension of the MOD R/M reg field 2144 and may be used to modify the MOD R/M reg field 2144 when that field encodes a general-purpose register, a 64-bit packed data register (e.g., an SSE register), or a control or debug register. R3 may be ignored when MOD R/M byte 2102 specifies other registers or defines an extended opcode.

Bit position 3 (W) can be used to determine an operand size, but may not solely determine operand width. As such, when W = 0, the operand size is determined by a code segment descriptor (CS.D) and when W = 1, the operand size is 64-bit.

Bit position 4 (B4) may further (along with B3) modify the base in the MOD R/M R/M field 2146 or the SIB byte base field 2156; or it may modify the opcode register field used for accessing general purpose registers (e.g., general purpose registers 1925).

Bit position 5 (X4) may further (along with X3) modify the SIB byte index field 2154.

Bit position 6 (R4) may further (along with R3) be used as an extension of the MOD R/M reg field 2144 and may be used to modify the MOD R/M reg field 2144 when that field encodes a general-purpose register, a 64-bit packed data register (e.g., an SSE register), or a control or debug register.

In some examples, bit position 7 (M0) indicates an opcode map (e.g., 0 or 1).

R3, R4, X3, X4, B3, and B4 allow for the addressing of 32 GPRs. That is an R, X or B register identifier is extended by the R3, X3, and B3 and R4, X4, and B4 bits in a REX2 prefix when and only when it encodes a GPR register. In some examples, the vector (or any other type of) registers are not encoded using those bits.

In some examples, REX2 must be the last prefix and the byte following it is interpreted as the main opcode byte in the opcode map indicated by M0. The 0x0F escape byte is neither needed nor allowed. In some examples, prefixes which may precede the REX2 prefix are LOCK (0xF0), REPE/REP/REPZ (0xF3), REPNE/REPNZ (0xF2), operand-size override (0x66), address-size override (0x67), and segment overrides.

In general, when any of the bits in REX2 R4, X4, B4, R3, X3, and B3 are not used they are ignored. For example, when there is no index register, X4 and X3 are both ignored. Similarly, when the R, X, or B register identifier encodes a vector register, the R4, X4, or B4 bit is ignored. There are, however, in some examples, one or two exceptions to this general rule: 1) an attempt to access a non-existent control register or debug register will trigger #UD and 2) instructions with opcodes 0x50-0x5F (including POP and PUSH) use R4 to encode a push-pop acceleration hint.

FIGS. 23(A)-(D) illustrate examples of how the R, X, and B fields of the first prefix 2001(A) are used. FIG. 23(A) illustrates R and B from the first prefix 2001(A) being used to extend the reg field 2144 and R/M field 2146 of the MOD R/M byte 2102 when the SIB byte 21 04 is not used for memory addressing. FIG. 23(B) illustrates R and B from the first prefix 2001(A) being used to extend the reg field 2144 and R/M field 2146 of the MOD R/M byte 2102 when the SIB byte 21 04 is not used (register-register addressing). FIG. 23(C) illustrates R, X, and B from the first prefix 2001(A) being used to extend the reg field 2144 of the MOD R/M byte 2102 and the index field 2154 and base field 2156 when the SIB byte 21 04 being used for memory addressing. FIG. 23(D) illustrates B from the first prefix 2001(A) being used to extend the reg field 2144 of the MOD R/M byte 2102 when a register is encoded in the opcode 2003. The R4 and R3 values of FIG. 22(B) can be used to expand rrr, B4 and B3 can be used to expand bbb, and X4 and X3 can be used to expand xxx.

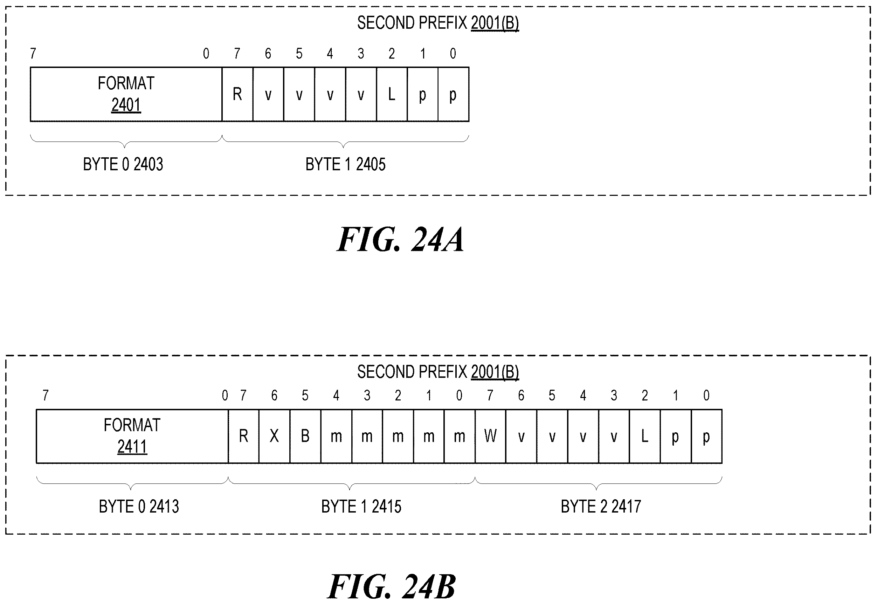

**FIGS. 24A-B** illustrate examples of a second prefix 2001(B). In some examples, the second prefix 2001(B) is an example of a VEX prefix. The second prefix 2001(B) encoding allows instructions to have more than two operands, and allows SIMD vector registers (e.g., vector/SIMD registers 1910) to be longer than 64-bits (e.g., 128-bit and 256-bit). The use of the second prefix 2001(B) provides for three-operand (or more) syntax. For example, previous two-operand instructions performed operations such as A = A + B, which overwrites a source operand. The use of the second prefix 2001(B) enables operands to perform nondestructive operations such as A = B + C.

In some examples, the second prefix 2001(B) comes in two forms - a two-byte form and a three-byte form. The two-byte second prefix 2001(B) is used mainly for 128-bit, scalar, and some 256-bit instructions; while the three-byte second prefix 2001(B) provides a compact replacement of the first prefix 2001(A) and 3-byte opcode instructions.

FIG. 24A illustrates examples of a two-byte form of the second prefix 2001(B). In some examples, a format field 2401 (byte 0 2403) contains the value C5H. In some examples, byte 1 2405 includes an "R" value in bit[7]. This value is the complement of the "R" value of the first prefix 2001(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2146 to encode the instruction operand that references a memory address or encode either the destination register operand or a source register operand.

Instructions that use this prefix may use the MOD R/M reg field 2144 to encode either the destination register operand or a source register operand, or to be treated as an opcode extension and not used to encode any instruction operand.

For instruction syntax that support four operands, vvvv, the MOD R/M R/M field 2146 and the MOD R/M reg field 2144 encode three of the four operands. Bits[7:4] of the immediate value field 2009 are then used to encode the third source register operand.

FIG. 24B illustrates examples of a three-byte form of the second prefix 2001(B). In some examples, a format field 2411 (byte 0 2413) contains the value C4H. Byte 1 2415 includes in bits[7:5] "R," "X," and "B" which are the complements of the same values of the first prefix 2001(A). Bits[4:0] of byte 1 2415 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2417 is used similar to W of the first prefix 2001(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2146 to encode the instruction operand that references a memory address or encode either the destination register operand or a source register operand.

Instructions that use this prefix may use the MOD R/M reg field 2144 to encode either the destination register operand or a source register operand, or to be treated as an opcode extension and not used to encode any instruction operand.

For instruction syntax that support four operands, vvvv, the MOD R/M R/M field 2146, and the MOD R/M reg field 2144 encode three of the four operands. Bits[7:4] of the immediate value field 2009 are then used to encode the third source register operand.

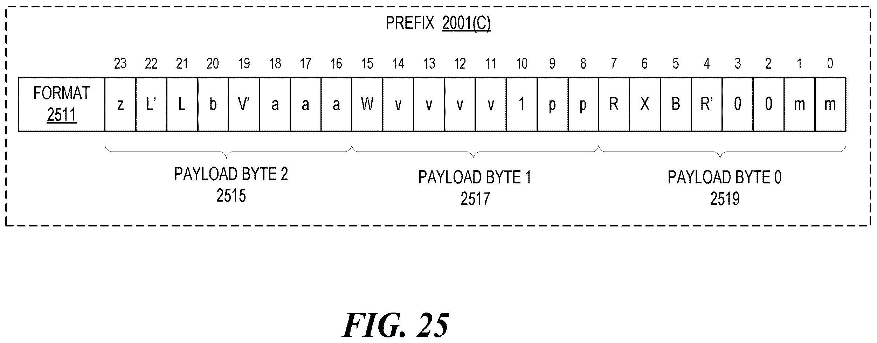

**FIGS. 25** illustrates examples of a third prefix 2001(C). In some examples, the third prefix 2001(C) is an example of an EVEX prefix. The third prefix 2001(C) is a four-byte prefix.

The third prefix 2001(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 19) or predication utilize this prefix. Opmask register allow for conditional processing or selection control. Opmask instructions, whose source/destination operands are opmask registers and treat the content of an opmask register as a single value, are encoded using the second prefix 2001(B).

The third prefix 2001(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2001(C) is a format field 2511 that has a value, in some examples, of 62H. Subsequent bytes are referred to as payload bytes 2515-2519 and collectively form a 24-bit value of P[23:0] providing specific capability in the form of one or more fields (detailed herein).

In some examples, P[1:0] of payload byte 2519 are identical to the low two mm bits. P[3:2] are reserved in some examples. Bit P[4] (R') allows access to the high 16 vector register set when combined with P[7] and the MOD R/M reg field 2144. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2144 and MOD R/M R/M field 2146. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 2001(A) and second prefix 2011(B) and may serve as an opcode extension bit or operand size promotion.

P[18:16] specify the index of a register in the opmask (writemask) registers (e.g., writemask/predicate registers 1915). In some examples, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a nondestructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 2001(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

### Graphics Execution Units

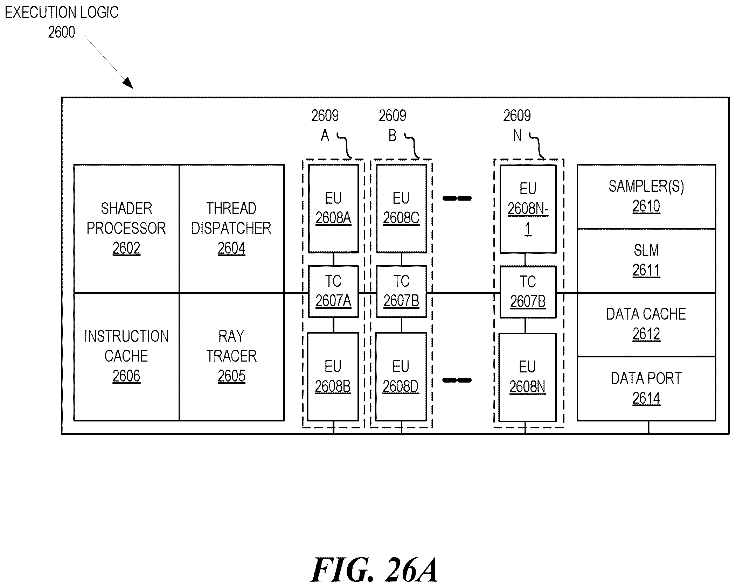

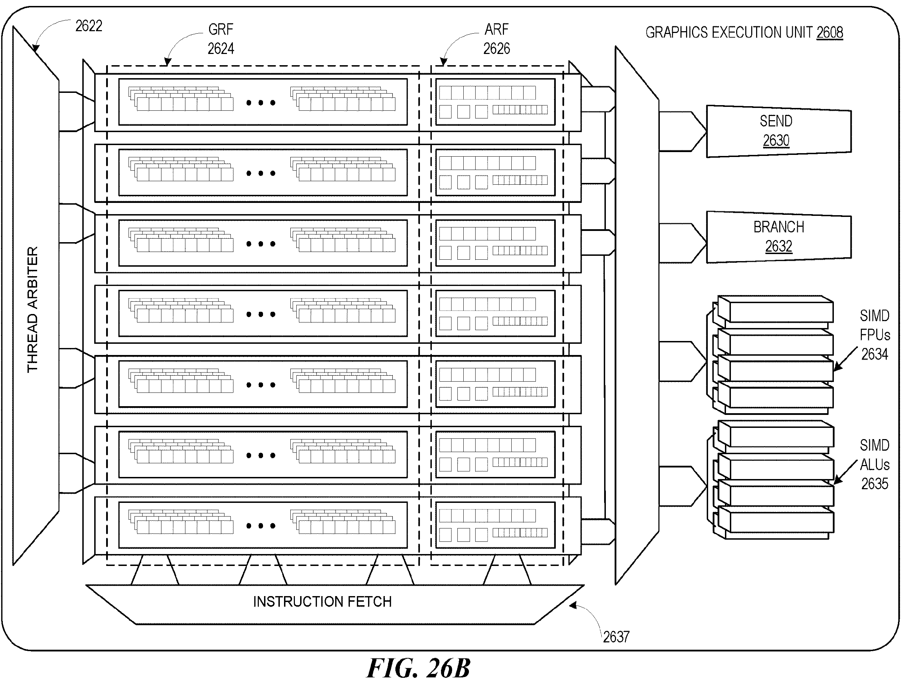

**FIGS. 26A-26B** illustrate thread execution logic 2600 including an array of processing elements employed in a graphics processor core according to examples described herein. Elements of Figures 26A-26B having the same reference numbers (or names) as the elements of any other figure herein can operate or function in any manner similar to that described elsewhere herein, but are not limited to such. Figure 26A is representative of an execution unit within a general-purpose graphics processor, while Figure 26B is representative of an execution unit that may be used within a compute accelerator.

As illustrated in FIG. 26A, in some examples thread execution logic 2600 includes a shader processor 2602, a thread dispatcher 2604, instruction cache 2606, a scalable execution unit array including a plurality of execution units 2608A-2608N, a sampler 2610, shared local memory 2611, a data cache 2612, and a data port 2614. In some examples the scalable execution unit array can dynamically scale by enabling or disabling one or more execution units (e.g., any of execution units 2608A, 2608B, 2608C, 2608D, through 2608N-1 and 2608N) based on the computational requirements of a workload. In some examples the included components are interconnected via an interconnect fabric that links to each of the components. In some examples, thread execution logic 2600 includes one or more connections to memory, such as system memory or cache memory, through one or more of instruction cache 2606, data port 2614, sampler 2610, and execution units 2608A-2608N. In some examples, each execution unit (e.g. 2608A) is a stand-alone programmable general-purpose computational unit that is capable of executing multiple simultaneous hardware threads while processing multiple data elements in parallel for each thread. In various examples, the array of execution units 2608A-2608N is scalable to include any number individual execution units.

In some examples, the execution units 2608A-2608N are primarily used to execute shader programs. A shader processor 2602 can process the various shader programs and dispatch execution threads associated with the shader programs via a thread dispatcher 2604. In some examples the thread dispatcher includes logic to arbitrate thread initiation requests from the graphics and media pipelines and instantiate the requested threads on one or more execution unit in the execution units 2608A-2608N. For example, a geometry pipeline can dispatch vertex, tessellation, or geometry shaders to the thread execution logic for processing. In some examples, thread dispatcher 2604 can also process runtime thread spawning requests from the executing shader programs.

In some examples, the execution units 2608A-2608N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 2608A-2608N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2608A-2608N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2608A-2608N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2608A-2608N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused graphics execution unit 2609A-2609N having thread control logic (2607A-2607N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2609A-2609N includes at least two execution units. For example, fused execution unit 2609A includes a first EU 2608A, second EU 2608B, and thread control logic 2607A that is common to the first EU 2608A and the second EU 2608B. The thread control logic 2607A controls threads executed on the fused graphics execution unit 2609A, allowing each EU within the fused execution units 2609A-2609N to execute using a common instruction pointer register.

One or more internal instruction caches (e.g., 2606) are included in the thread execution logic 2600 to cache thread instructions for the execution units. In some examples, one or more data caches (e.g., 2612) are included to cache thread data during thread execution. Threads executing on the thread execution logic 2600 can also store explicitly managed data in the shared local memory 2611. In some examples, a sampler 2610 is included to provide texture sampling for 3D operations and media sampling for media operations. In some examples, sampler 2610 includes specialized texture or media sampling functionality to process texture or media data during the sampling process before providing the sampled data to an execution unit.

During execution, the graphics and media pipelines send thread initiation requests to thread execution logic 2600 via thread spawning and dispatch logic. Once a group of geometric objects has been processed and rasterized into pixel data, pixel processor logic (e.g., pixel shader logic, fragment shader logic, etc.) within the shader processor 2602 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 2602 then executes an application programming interface (API)-supplied pixel or fragment shader program. To execute the shader program, the shader processor 2602 dispatches threads to an execution unit (e.g., 2608A) via thread dispatcher 2604. In some examples, shader processor 2602 uses texture sampling logic in the sampler 2610 to access texture data in texture maps stored in memory. Arithmetic operations on the texture data and the input geometry data compute pixel color data for each geometric fragment, or discards one or more pixels from further processing.

In some examples, the data port 2614 provides a memory access mechanism for the thread execution logic 2600 to output processed data to memory for further processing on a graphics processor output pipeline. In some examples, the data port 2614 includes or couples to one or more cache memories (e.g., data cache 2612) to cache data for memory access via the data port.

In some examples, the execution logic 2600 can also include a ray tracer 2605 that can provide ray tracing acceleration functionality. The ray tracer 2605 can support a ray tracing instruction set that includes instructions/functions for ray generation.

FIG. 26B illustrates exemplary internal details of an execution unit 2608, according to examples. A graphics execution unit 2608 can include an instruction fetch unit 2637, a general register file array (GRF) 2624, an architectural register file array (ARF) 2626, a thread arbiter 2622, a send unit 2630, a branch unit 2632, a set of SIMD floating point units (FPUs) 2634, and in some examples a set of dedicated integer SIMD ALUs 2635. The GRF 2624 and ARF 2626 includes the set of general register files and architecture register files associated with each simultaneous hardware thread that may be active in the graphics execution unit 2608. In some examples, per thread architectural state is maintained in the ARF 2626, while data used during thread execution is stored in the GRF 2624. The execution state of each thread, including the instruction pointers for each thread, can be held in thread-specific registers in the ARF 2626.

In some examples the graphics execution unit 2608 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2608 is not limited to the number of hardware threads, and multiple logical threads can be assigned to each hardware thread.

In some examples, the graphics execution unit 2608 can co-issue multiple instructions, which may each be different instructions. The thread arbiter 2622 of the graphics execution unit thread 2608 can dispatch the instructions to one of the send unit 2630, branch unit 2632, or SIMD FPU(s) 2634 for execution. Each execution thread can access 128 general-purpose registers within the GRF 2624, where each register can store 32 bytes, accessible as a SIMD 8-element vector of 32-bit data elements. In some examples, each execution unit thread has access to 4 Kbytes within the GRF 2624, although examples are not so limited, and greater or fewer register resources may be provided in other examples. In some examples the graphics execution unit 2608 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 2624 can store a total of 28 Kbytes. Where 16 threads may access 4Kbytes, the GRF 2624 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2630. In some examples, branch instructions are dispatched to a dedicated branch unit 2632 to facilitate SIMD divergence and eventual convergence.

In some examples the graphics execution unit 2608 includes one or more SIMD FPU(s) 2634 to perform floating-point operations. In some examples, the FPU(s) 2634 also support integer computation. In some examples the FPU(s) 2634 can SIMD execute up to M number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2635 are also present, and may be specifically optimized to perform operations associated with machine learning computations.

In some examples, arrays of multiple instances of the graphics execution unit 2608 can be instantiated in a graphics sub-core grouping (e.g., a sub-slice). For scalability, product architects can choose the exact number of execution units per sub-core grouping. In some examples the execution unit 2608 can execute instructions across a plurality of execution channels. In a further example, each thread executed on the graphics execution unit 2608 is executed on a different channel.

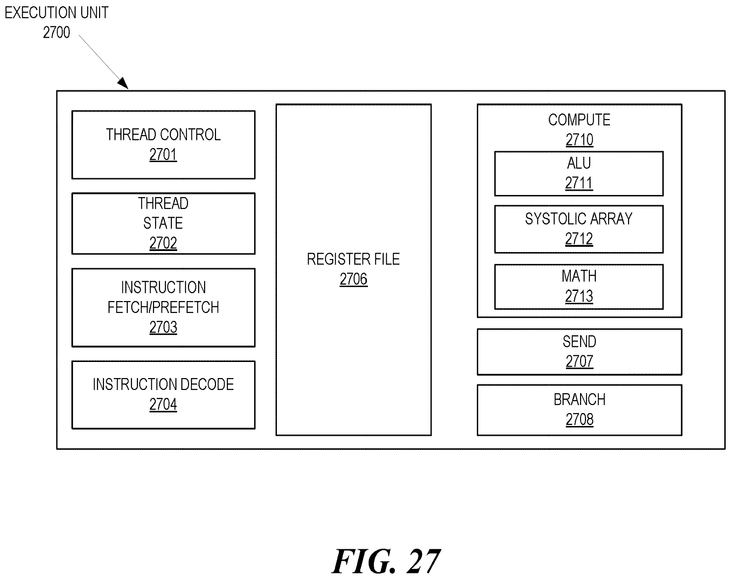

**FIG. 27** illustrates an additional execution unit 2700, according to an example. In some examples, the execution unit 2700 includes a thread control unit 2701, a thread state unit 2702, an instruction fetch/prefetch unit 2703, and an instruction decode unit 2704. The execution unit 2700 additionally includes a register file 2706 that stores registers that can be assigned to hardware threads within the execution unit. The execution unit 2700 additionally includes a send unit 2707 and a branch unit 2708. In some examples, the send unit 2707 and branch unit 2708 can operate similarly as the send unit 2630 and a branch unit 2632 of the graphics execution unit 2608 of Figure 26B.

The execution unit 2700 also includes a compute unit 2710 that includes multiple different types of functional units. In some examples the compute unit 2710 includes an ALU unit 2711 that includes an array of arithmetic logic units. The ALU unit 2711 can be configured to perform 64-bit, 32-bit, and 16-bit integer and floating point operations. Integer and floating point operations may be performed simultaneously. The compute unit 2710 can also include a systolic array 2712, and a math unit 2713. The systolic array 2712 includes a W wide and D deep network of data processing units that can be used to perform vector or other data-parallel operations in a systolic manner. In some examples the systolic array 2712 can be configured to perform matrix operations, such as matrix dot product operations. In some examples the systolic array 2712 support 16-bit floating point operations, as well as 8-bit and 4-bit integer operations. In some examples the systolic array 2712 can be configured to accelerate machine learning operations. In such examples, the systolic array 2712 can be configured with support for the bfloat 16-bit floating point format. In some examples, a math unit 2713 can be included to perform a specific subset of mathematical operations in an efficient and lower-power manner than the ALU unit 2711. The math unit 2713 can include a variant of math logic that may be found in shared function logic of a graphics processing engine provided by other examples. In some examples the math unit 2713 can be configured to perform 32-bit and 64-bit floating point operations.

The thread control unit 2701 includes logic to control the execution of threads within the execution unit. The thread control unit 2701 can include thread arbitration logic to start, stop, and preempt execution of threads within the execution unit 2700. The thread state unit 2702 can be used to store thread state for threads assigned to execute on the execution unit 2700. Storing the thread state within the execution unit 2700 enables the rapid pre-emption of threads when those threads become blocked or idle. The instruction fetch/prefetch unit 2703 can fetch instructions from an instruction cache of higher level execution logic (e.g., instruction cache 2606 as in Figure 26A). The instruction fetch/prefetch unit 2703 can also issue prefetch requests for instructions to be loaded into the instruction cache based on an analysis of currently executing threads. The instruction decode unit 2704 can be used to decode instructions to be executed by the compute units. In some examples, the instruction decode unit 2704 can be used as a secondary decoder to decode complex instructions into constituent micro-operations.

The execution unit 2700 additionally includes a register file 2706 that can be used by hardware threads executing on the execution unit 2700. Registers in the register file 2706 can be divided across the logic used to execute multiple simultaneous threads within the compute unit 2710 of the execution unit 2700. The number of logical threads that may be executed by the execution unit 2700 is not limited to the number of hardware threads, and multiple logical threads can be assigned to each hardware thread. The size of the register file 2706 can vary across examples based on the number of supported hardware threads. In some examples, register renaming may be used to dynamically allocate registers to hardware threads.

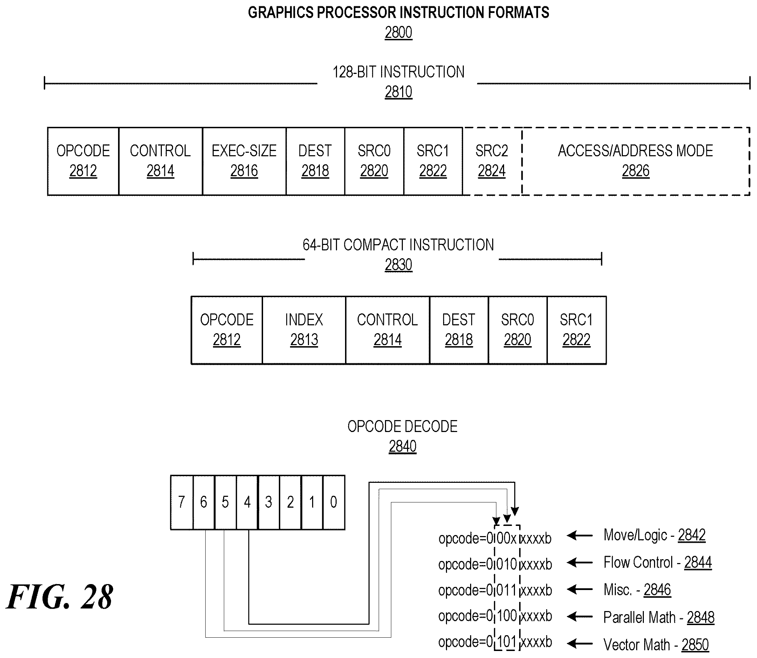

**FIG. 28** is a block diagram illustrating a graphics processor instruction formats 2800 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 2800 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 2810. A 64-bit compacted instruction format 2830 is available for some instructions based on the selected instruction, instruction options, and number of operands. The native 128-bit instruction format 2810 provides access to all instruction options, while some options and operations are restricted in the 64-bit compacted format 2830. The native instructions available in the 64-bit compacted format 2830 vary by example. In some examples, the instruction is compacted in part using a set of index values in an index field 2813. The execution unit hardware references a set of compaction tables based on the index values and uses the compaction table outputs to reconstruct a native instruction in the 128-bit instruction format 2810. Other sizes and formats of instruction can be used.

For each format, instruction opcode 2812 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 2814 enables control over certain execution options, such as channels selection (e.g., predication) and data channel order (e.g., swizzle). For instructions in the 128-bit instruction format 2810 an exec-size field 2816 limits the number of data channels that will be executed in parallel. In some examples, exec-size field 2816 is not available for use in the 64-bit compact instruction format 2830.

Some execution unit instructions have up to three operands including two source operands, src0 2820, src1 2822, and one destination 2818. In some examples, the execution units support dual destination instructions, where one of the destinations is implied. Data manipulation instructions can have a third source operand (e.g., SRC2 2824), where the instruction opcode 2812 determines the number of source operands. An instruction's last source operand can be an immediate (e.g., hard-coded) value passed with the instruction.

In some examples, the 128-bit instruction format 2810 includes an access/address mode field 2826 specifying, for example, whether direct register addressing mode or indirect register addressing mode is used. When direct register addressing mode is used, the register address of one or more operands is directly provided by bits in the instruction.

In some examples, the 128-bit instruction format 2810 includes an access/address mode field 2826, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 2826 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 2812 bit-fields to simplify Opcode decode 2840. For an 8-bit opcode, bits 4, 5, and 6 allow the execution unit to determine the type of opcode. The precise opcode grouping shown is merely an example. In some examples, a move and logic opcode group 2842 includes data movement and logic instructions (e.g., move (mov), compare (cmp)). In some examples, move and logic opcode group 2842 shares the five most significant bits (MSB), where move (mov) instructions are in the form of 0000xxxxb and logic instructions are in the form of 0001xxxxb. A flow control instruction group 2844 (e.g., call, jump (jmp)) includes instructions in the form of 0010xxxxb (e.g., 0x20). A miscellaneous instruction group 2846 includes a mix of instructions, including synchronization instructions (e.g., wait, send) in the form of 001 1xxxxb (e.g., 0x30). A parallel math instruction group 2848 includes component-wise arithmetic instructions (e.g., add, multiply (mul)) in the form of 0100xxxxb (e.g., 0x40). The parallel math instruction group 2848 performs the arithmetic operations in parallel across data channels. The vector math group 2850 includes arithmetic instructions (e.g., dp4) in the form of 0101xxxxb (e.g., 0x50). The vector math group performs arithmetic such as dot product calculations on vector operands. The illustrated opcode decode 2840, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic. Graphics Pipeline

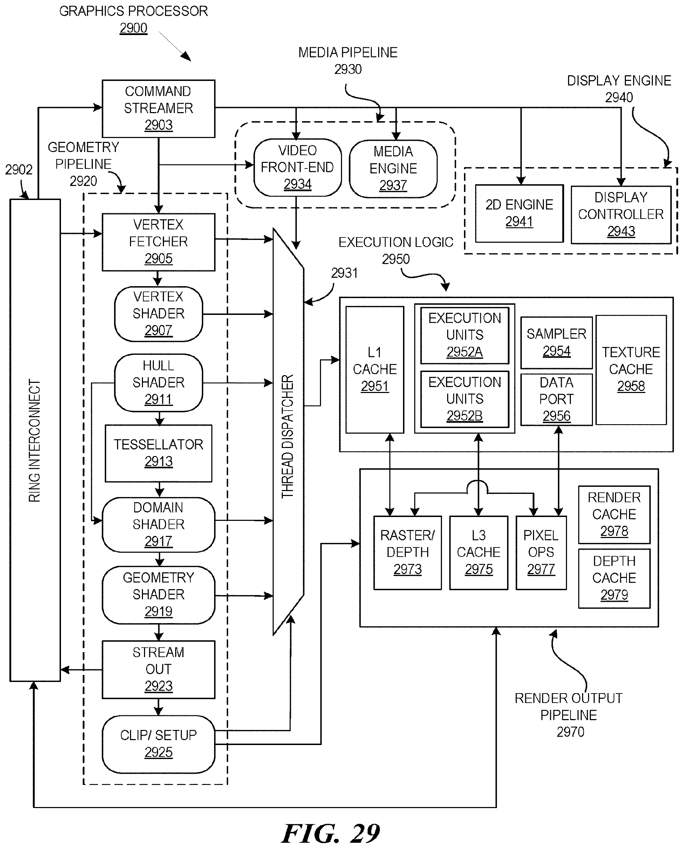

**FIG. 29** is a block diagram of another example of a graphics processor 2900. Elements of Figure 29 having the same reference numbers (or names) as the elements of any other figure herein can operate or function in any manner similar to that described elsewhere herein, but are not limited to such.

In some examples, graphics processor 2900 includes a geometry pipeline 2920, a media pipeline 2930, a display engine 2940, thread execution logic 2950, and a render output pipeline 2970. In some examples, graphics processor 2900 is a graphics processor within a multi-core processing system that includes one or more general-purpose processing cores. The graphics processor is controlled by register writes to one or more control registers (not shown) or via commands issued to graphics processor 2900 via a ring interconnect 2902. In some examples, ring interconnect 2902 couples graphics processor 2900 to other processing components, such as other graphics processors or general-purpose processors. Commands from ring interconnect 2902 are interpreted by a command streamer 2903, which supplies instructions to individual components of the geometry pipeline 2920 or the media pipeline 2930.

In some examples, command streamer 2903 directs the operation of a vertex fetcher 2905 that reads vertex data from memory and executes vertex-processing commands provided by command streamer 2903. In some examples, vertex fetcher 2905 provides vertex data to a vertex shader 2907, which performs coordinate space transformation and lighting operations to each vertex. In some examples, vertex fetcher 2905 and vertex shader 2907 execute vertex-processing instructions by dispatching execution threads to execution units 2952A-2952B via a thread dispatcher 2931.

In some examples, execution units 2952A-2952B are an array of vector processors having an instruction set for performing graphics and media operations. In some examples, execution units 2952A-2952B have an attached L1 cache 2951 that is specific for each array or shared between the arrays. The cache can be configured as a data cache, an instruction cache, or a single cache that is partitioned to contain data and instructions in different partitions.

In some examples, geometry pipeline 2920 includes tessellation components to perform hardware-accelerated tessellation of 3D objects. In some examples, a programmable hull shader 2911 configures the tessellation operations. A programmable domain shader 2917 provides back- end evaluation of tessellation output. A tessellator 2913 operates at the direction of hull shader 2911 and contains special purpose logic to generate a set of detailed geometric objects based on a coarse geometric model that is provided as input to geometry pipeline 2920. In some examples, if tessellation is not used, tessellation components (e.g., hull shader 2911, tessellator 2913, and domain shader 2917) can be bypassed.

In some examples, complete geometric objects can be processed by a geometry shader 2919 via one or more threads dispatched to execution units 2952A-2952B, or can proceed directly to the clipper 2929. In some examples, the geometry shader operates on entire geometric objects, rather than vertices or patches of vertices as in previous stages of the graphics pipeline. If the tessellation is disabled the geometry shader 2919 receives input from the vertex shader 2907. In some examples, geometry shader 2919 is programmable by a geometry shader program to perform geometry tessellation if the tessellation units are disabled.

Before rasterization, a clipper 2929 processes vertex data. The clipper 2929 may be a fixed function clipper or a programmable clipper having clipping and geometry shader functions. In some examples, a rasterizer and depth test component 2973 in the render output pipeline 2970 dispatches pixel shaders to convert the geometric objects into per pixel representations. In some examples, pixel shader logic is included in thread execution logic 2950. In some examples, an application can bypass the rasterizer and depth test component 2973 and access un-rasterized vertex data via a stream out unit 2923.

The graphics processor 2900 has an interconnect bus, interconnect fabric, or some other interconnect mechanism that allows data and message passing amongst the major components of the processor. In some examples, execution units 2952A-2952B and associated logic units (e.g., L1 cache 2951, sampler 2954, texture cache 2958, etc.) interconnect via a data port 2956 to perform memory access and communicate with render output pipeline components of the processor. In some examples, sampler 2954, caches 2951, 2958 and execution units 2952A-2952B each have separate memory access paths. In some examples the texture cache 2958 can also be configured as a sampler cache.

In some examples, render output pipeline 2970 contains a rasterizer and depth test component 2973 that converts vertex-based objects into an associated pixel-based representation. In some examples, the rasterizer logic includes a windower/masker unit to perform fixed function triangle and line rasterization. An associated render cache 2978 and depth cache 2979 are also available in some examples. A pixel operations component 2977 performs pixel-based operations on the data, though in some instances, pixel operations associated with 2D operations (e.g. bit block image transfers with blending) are performed by the 2D engine 2941, or substituted at display time by the display controller 2943 using overlay display planes. In some examples, a shared L3 cache 2975 is available to all graphics components, allowing the sharing of data without the use of main system memory.

In some examples, media pipeline 2930 includes a media engine 2937 and a video front-end 2934. In some examples, video front-end 2934 receives pipeline commands from the command streamer 2903. In some examples, media pipeline 2930 includes a separate command streamer. In some examples, video front-end 2934 processes media commands before sending the command to the media engine 2937. In some examples, media engine 2937 includes thread spawning functionality to spawn threads for dispatch to thread execution logic 2950 via thread dispatcher 2931.

In some examples, graphics processor 2900 includes a display engine 2940. In some examples, display engine 2940 is external to graphics processor 2900 and couples with the graphics processor via the ring interconnect 2902, or some other interconnect bus or fabric. In some examples, display engine 2940 includes a 2D engine 2941 and a display controller 2943. In some examples, display engine 2940 contains special purpose logic capable of operating independently of the 3D pipeline. In some examples, display controller 2943 couples with a display device (not shown), which may be a system integrated display device, as in a laptop computer, or an external display device attached via a display device connector.

In some examples, the geometry pipeline 2920 and media pipeline 2930 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming

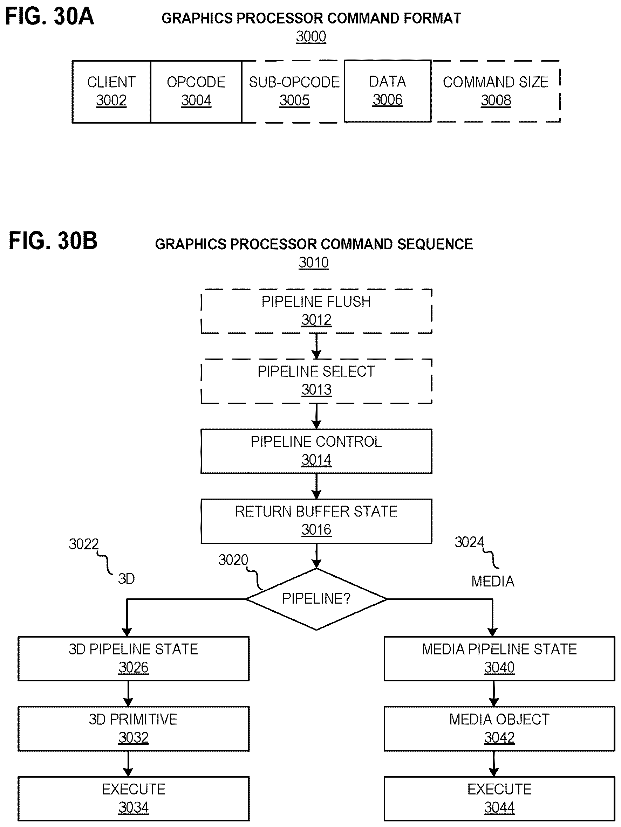

**FIG. 30A** is a block diagram illustrating a graphics processor command format 3000 according to some examples. **FIG. 30B** is a block diagram illustrating a graphics processor command sequence 3010 according to an example. The solid lined boxes in Figure 30A illustrate the components that are generally included in a graphics command while the dashed lines include components that are optional or that are only included in a sub-set of the graphics commands. The graphics processor command format 3000 of Figure 30A includes data fields to identify a client 3002, a command operation code (opcode) 3004, and data 3006 for the command. A sub-opcode 3005 and a command size 3008 are also included in some commands.

In some examples, client 3002 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 3004 and, if present, sub-opcode 3005 to determine the operation to perform. The client unit performs the command using information in data field 3006. For some commands an explicit command size 3008 is expected to specify the size of the command. In some examples, the command parser automatically determines the size of at least some of the commands based on the command opcode. In some examples commands are aligned via multiples of a double word. Other command formats can be used.

The flow diagram in FIG. 30B illustrates a graphics processor command sequence 3010. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 3010 may begin with a pipeline flush command 3012 to cause any active graphics pipeline to complete the currently pending commands for the pipeline. In some examples, the 3D pipeline 3022 and the media pipeline 3024 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 3012 can be used for pipeline synchronization or before placing the graphics processor into a low power state.

In some examples, a pipeline select command 3013 is used when a command sequence requires the graphics processor to explicitly switch between pipelines. In some examples, a pipeline select command 3013 is required only once within an execution context before issuing pipeline commands unless the context is to issue commands for both pipelines. In some examples, a pipeline flush command 3012 is required immediately before a pipeline switch via the pipeline select command 3013.

In some examples, a pipeline control command 3014 configures a graphics pipeline for operation and is used to program the 3D pipeline 3022 and the media pipeline 3024. In some examples, pipeline control command 3014 configures the pipeline state for the active pipeline. In some examples, the pipeline control command 3014 is used for pipeline synchronization and to clear data from one or more cache memories within the active pipeline before processing a batch of commands.

In some examples, return buffer state commands 3016 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state includes selecting the size and number of return buffers to use for a set of pipeline operations.

The remaining commands in the command sequence differ based on the active pipeline for operations. Based on a pipeline determination 3020, the command sequence is tailored to the 3D pipeline 3022 beginning with the 3D pipeline state 3030 or the media pipeline 3024 beginning at the media pipeline state 3040.

The commands to configure the 3D pipeline state 3030 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 3030 commands are also able to selectively disable or bypass certain pipeline elements if those elements will not be used.

In some examples, 3D primitive 3032 command is used to submit 3D primitives to be processed by the 3D pipeline. Commands and associated parameters that are passed to the graphics processor via the 3D primitive 3032 command are forwarded to the vertex fetch function in the graphics pipeline. The vertex fetch function uses the 3D primitive 3032 command data to generate vertex data structures. The vertex data structures are stored in one or more return buffers. In some examples, 3D primitive 3032 command is used to perform vertex operations on 3D primitives via vertex shaders. To process vertex shaders, 3D pipeline 3022 dispatches shader execution threads to graphics processor execution units.

In some examples, 3D pipeline 3022 is triggered via an execute 3034 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 3010 follows the media pipeline 3024 path when performing media operations. In general, the specific use and manner of programming for the media pipeline 3024 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 3024 is configured in a similar manner as the 3D pipeline 3022. A set of commands to configure the media pipeline state 3040 are dispatched or placed into a command queue before the media object commands 3042. In some examples, commands for the media pipeline state 3040 include data to configure the media pipeline elements that will be used to process the media objects. This includes data to configure the video decode and video encode logic within the media pipeline, such as encode or decode format. In some examples, commands for the media pipeline state 3040 also support the use of one or more pointers to "indirect" state elements that contain a batch of state settings.

In some examples, media object commands 3042 supply pointers to media objects for processing by the media pipeline. The media objects include memory buffers containing video data to be processed. In some examples, all media pipeline states must be valid before issuing a media object command 3042. Once the pipeline state is configured and media object commands 3042 are queued, the media pipeline 3024 is triggered via an execute command 3044 or an equivalent execute event (e.g., register write). Output from media pipeline 3024 may then be post processed by operations provided by the 3D pipeline 3022 or the media pipeline 3024. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

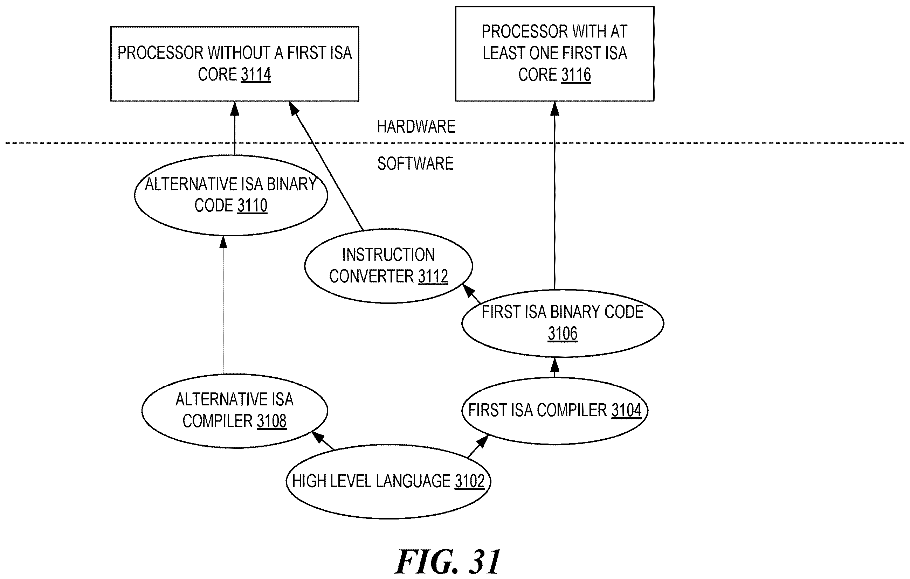

**FIG. 31** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 31 shows a program in a high-level language 3102 may be compiled using a first ISA compiler 3104 to generate first ISA binary code 3106 that may be natively executed by a processor with at least one first ISA core 3116. The processor with at least one first ISA core 3116 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 3104 represents a compiler that is operable to generate first ISA binary code 3106 (e.g., object code) that can, with or without additional linkage processing, be executed on the processor with at least one first ISA core 3116. Similarly, FIG. 31 shows the program in the high-level language 3102 may be compiled using an alternative ISA compiler 3108 to generate alternative ISA binary code 3110 that may be natively executed by a processor without a first ISA core 3114. The instruction converter 3112 is used to convert the first ISA binary code 3106 into code that may be natively executed by the processor without a first ISA core 3114. This converted code is not necessarily to be the same as the alternative ISA binary code 3110; however, the converted code will accomplish the general operation and be made up of instructions from the alternative ISA. Thus, the instruction converter 3112 represents software, firmware, hardware, or a combination thereof that, through emulation, simulation or any other process, allows a processor or other electronic device that does not have a first ISA processor or core to execute the first ISA binary code 3106.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

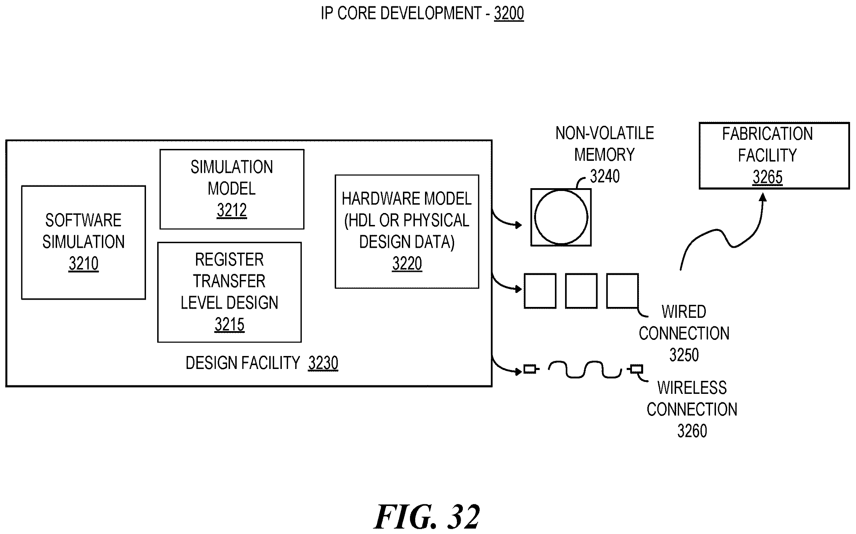

**FIG. 32** is a block diagram illustrating an IP core development system 3200 that may be used to manufacture an integrated circuit to perform operations according to some examples. The IP core development system 3200 may be used to generate modular, re-usable designs that can be incorporated into a larger design or used to construct an entire integrated circuit (e.g., an SOC integrated circuit). A design facility 3230 can generate a software simulation 3210 of an IP core design in a high-level programming language (e.g., C/C++). The software simulation 3210 can be used to design, test, and verify the behavior of the IP core using a simulation model 3212. The simulation model 3212 may include functional, behavioral, and/or timing simulations. A register transfer level (RTL) design 3215 can then be created or synthesized from the simulation model 3212. The RTL design 3215 is an abstraction of the behavior of the integrated circuit that models the flow of digital signals between hardware registers, including the associated logic performed using the modeled digital signals. In addition to an RTL design 3215, lower-level designs at the logic level or transistor level may also be created, designed, or synthesized. Thus, the particular details of the initial design and simulation may vary.

The RTL design 3215 or equivalent may be further synthesized by the design facility into a hardware model 3220, which may be in a hardware description language (HDL), or some other representation of physical design data. The HDL may be further simulated or tested to verify the IP core design. The IP core design can be stored for delivery to a fabrication facility 3265 using non-volatile memory 3240 (e.g., hard disk, flash memory, or any non-volatile storage medium). Alternatively, the IP core design may be transmitted (e.g., via the Internet) over a wired connection 3250 or wireless connection 3260. The fabrication facility 3265 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).The specification and drawings are, accordingly, to be regarded in an illustrative rather than a restrictive sense. It will, however, be evident that various modifications and changes may be made thereunto without departing from the broader spirit and scope of the disclosure as set forth in the claims.

It is emphasized that the Abstract of the Disclosure is provided to comply with 37 C.F.R. Section 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separate example. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

## Claims

1. An apparatus comprising:
a first core of a multi-core processor; and
a second core of the multi-core processor, the second core to be configured to cause a request to load data from system memory to a last level cache (LLC) slice allocated to the core, the LLC slice included in a cache shared with at least the first core of the multi-core processor, the data to be shared between the core and the at least the first core in association with execution of an application workload, wherein the second core includes circuitry configured to:
maintain a data sharing count value;
cause the data sharing count value to be decremented by a first decrement value responsive to detecting the request to load the data from system memory; and
cause the LLC slice to be placed in an inclusive or non-inclusive mode for the data loaded to the LLC slice based on whether the decremented data sharing count value exceeds a threshold count value.

2. The apparatus of claim 1, wherein the second core is a leader core and the at least first core is a follower core for access to the data loaded to the LLC slice from system memory.

3. The apparatus of claim 2, wherein the inclusive mode enables the follower core to access the data loaded to the LLC slice from system memory without sending a snoop request to the leader core and the non-inclusive mode requires the follower core to send a snoop request to the leader core before accessing the data loaded to the LLC slice.

4. The apparatus of claim 3 wherein, when the decremented data sharing count value does not exceed the threshold count value and the LLC slice is placed in the non-inclusive mode, the circuitry is further configured to:
cause the data sharing count value to be incremented by an increment value responsive to detecting a snoop request from the follower core that is an LLC hit for the data loaded to the LLC slice from system memory; and
cause the LLC slice to be placed in the inclusive or the non-inclusive mode for the data loaded to the LLC slice from system memory based on whether the incremented data sharing count value exceeds the threshold count value.

5. The apparatus of claim 4, wherein the increment value is based on a number of separate LLC slices included in the cache shared with the at least one other core of the multi-core processor.

6. The apparatus of claim 3 wherein, when the decremented data sharing count value exceeds the threshold count value and the LLC slice is placed in the inclusive mode, the circuitry is further configured to:
set an attribute for the data loaded to the LLC slice to indicate the LLC slice is placed in the inclusive mode such that responsive to a read request from the follower core that is an LLC hit for the data loaded to the LLC slice from system memory, a copy of the data loaded to the LLC slice is provided to the follower core without requiring a snoop request to the leader core.

7. The apparatus of any of claims 1-6, wherein the circuitry is further configured to:
cause the data sharing count value to be decremented by a second decrement value responsive to an expiration of a period of time.

8. The apparatus of any of claims 1-7, wherein execution of the application workload includes a weighted matrix operation that includes the core and the at least one other core sharing the data loaded to the LLC slice to complete the weighted matrix operation.

9. A method comprising:
maintaining a data sharing count value for data loaded from system memory to a last level cache (LLC) slice allocated to the core, the LLC slice included in a cache shared with at least one other core of the multi-core processor, the data to be shared between the core and the at least one other core in association with execution of an application workload;
decrementing, by a first decrement value, the data sharing count value responsive to detecting a request from the core to load the data from system memory to the LLC slice; and
causing the LLC slice to be placed in an inclusive or non-inclusive mode for the data
loaded to the LLC slice based on whether the decremented data sharing count value exceeds a threshold count value.

10. The method of claim 9, wherein the core is a leader core and the at least one other core is a follower core for accessing the data loaded to the LLC slice from system memory, and wherein the inclusive mode enables the follower core to access the data loaded to the LLC slice from system memory without sending a snoop request to the leader core and the non-inclusive mode requires the follower core to send a snoop request to the leader core before accessing the data loaded to the LLC slice.

11. The methodof claim 9 wherein, when the decremented data sharing count value does not exceed the threshold count value and the LLC slice is placed in the non-inclusive mode, the instructions are to further cause the circuitry to:
cause the data sharing count value to be incremented by an increment value responsive to detecting a snoop request from the follower core that is an LLC hit for the data loaded to the LLC slice from system memory; and
cause the LLC slice to be placed in the inclusive or the non-inclusive mode for the data loaded to the LLC slice from system memory based on whether the incremented data sharing count value exceeds the threshold count value.

12. The methodof claim 11, wherein the increment value is based on a number of separate LLC slices included in the cache shared with the at least one other core of the multi-core processor.

13. The methodof claim 9 wherein, when the decremented data sharing count value exceeds the threshold count value and the LLC slice is placed in the inclusive mode, the instructions are to further cause the circuitry to:
set an attribute for the data loaded to the LLC slice to indicate the LLC slice is placed in the inclusive mode such that responsive to a read request from the follower core that is an LLC hit for the data loaded to the LLC slice from system memory, a copy of the data loaded to the LLC slice is provided to the follower core without requiring a snoop request to the leader core.

14. The methodof claim 9, wherein the instructions are to further cause the circuitry to:
cause the data sharing count value to be decremented by a second decrement value responsive to an expiration of a period of time.
